# EUROPÄISCHE PATENTSCHRIFT

(11) **EP 3 839 918 B1**
(45) Veröffentlichungstag und Bekanntmachung des Hinweises auf die Patenterteilung: **11.12.2024**
(21) Anmeldenummer: 19217401.9
(22) Anmeldetag: 18.12.2019
(51) Int. Cl.: G08G 1/14, H04W 4/80, G07B 15/04, G06Q 10/02

(54) **SYSTEM ZUR PARKPLATZ-ZUFAHRTSKONTROLLE**
PARKING LOCATION APPROACH CONTROL SYSTEM
SYSTÈME DE CONTRÔLE D'ACCÈS AUX PLACES DE STATIONNEMENT

(43) Veröffentlichungstag der Anmeldung: 23.06.2021
(73) Patentinhaber: R+V Allgemeine Versicherung AG, 65189 Wiesbaden (DE)
(72) Erfinder: JUNG, Matthias, 65205 Wiesbaden (DE); KREINBIHL, Michael, 63505 Langenselbold (DE)
(74) Vertreter: Richardt Patentanwälte PartG mbB

(56) Entgegenhaltungen:
- WO-A1-2019/132988
- US-A1- 2017 061 508
- US-A1- 2019 122 449

## Beschreibung

### Gebiet

Die Erfindung betrifft ein Verfahren und System zur Kontrolle der Zufahrt zu Parkplätzen.

### Hintergrund

Lastwagenfahrer müssen jeden Tag eine gesetzlich vorgeschriebene Mindestruhezeit ableisten. In Deutschland fehlen jedoch jede Nacht rund 30.000 Stellplätze für LKWs. Es ist daher oftmals für LKW-Fahrer schwierig, einen für die Nachtruhe geeigneten Stellplatz zu finden ohne die maximal zulässige Fahrzeit zu überschreiten bzw. die vorgeschriebene Ruhezeit zu unterschreiten. Es geht viel Zeit und Treibstoff dadurch verloren, dass Fahrer auf einen Rastplatz abfahren nur um festzustellen, dass dieser bereits vollständig belegt ist und sich dann wieder in den Verkehr einfädeln zu müssen. Außerdem sind frei zugängliche Stellplätze schlecht geschützt vor Diebstahl.

Oft werden nächtliche Ruhezeiten von Dieben genutzt, um ganze LKW Frachten heimlich auf einen anderen LKW zu verladen und zu stehlen. Zugangsbeschränkte LKW Stellplätze sind jedoch kaum verfügbar. Wenn der Zugang von Menschen kontrolliert wird, ist der Service oft teuer und die Öffnungszeiten begrenzt. Die US Patentanmeldung 2004/236615 A1 beschreibt ein Verfahren und System zum elektronischen Buchen von Parkplätzen, die mittels mindestens eines Terminals (BO) verwaltet werden. Dazu stellt ein Nutzer eine Buchungsanfrage, erhält die entsprechenden Buchungsdaten und präsentiert die Buchungsdaten dem zu dem Parkplatz gehörenden Terminal. Die Parkplätze können mit ferngesteuerten Zugangskontrollvorrichtungen ausgestattet sein, die nur von dem Nutzer, der den Parkplatz gebucht hat, über das Terminal oder über ein Smartphone gesteuert werden können.

Allerdings handelt es sich bei den bestehenden Lösungen zur automatischen Buchung oftmals um Insellösungen mit begrenzter räumlicher und zeitlicher Verfügbarkeit, proprietären Schnittstellen und ungelösten Sicherheitsproblemen. Zwar gibt es in der Nähe von Autobahnen und Autobahnzubringern oftmals Stellplätze von privaten Lieferbetrieben und Speditionen, die entsprechenden Kommunikationsschnittstellen und Backend-Dienste sind jedoch oftmals proprietär und/oder nur für Fahrzeuge des eigenen Betriebs verfügbar, sodass sich frei verfügbarer Platz nur von Lastwagen der jeweiligen Firma nutzen lässt.

Die internationale Patentanmeldung WO 2019/132988 A1 betrifft ein Parksystem zur Verwaltung eines Parkereignisses. Das System umfasst einen Server, der das Parkereignis plant, eine Softwarekomponente, die auf einem elektronischen Gerät läuft und eine drahtlose Kommunikation zwischen dem elektronischen Gerät und dem Server ermöglicht, und eine Parkraumvorrichtung. Die Parkplatzvorrichtung ist so konfiguriert, dass sie den Zugang zum Parkplatz während des Parkereignisses sperrt/erlaubt. Der Server ist so konfiguriert, dass er Funktionen wie Platzwechsel, frühe Ankunft, späte Ankunft und Ereigniswiederholung aktiviert.

Die US Patentanmeldung US 2017/061508 A1 betrifft ein Parkhaussystem mit einer Vielzahl von Parkgaragen. Jedes Parkhaus hat eine Vielzahl von Parksektoren und jeder Parksektor hat eine Vielzahl von Parkplätzen. Ein digitales System verfolgt den Belegungsgrad jedes Parksektors und die voraussichtliche Abfahrtszeit der auf den einzelnen Parkplätzen abgestellten Fahrzeuge. Das digitale System leitet die Fahrzeuge auf der Grundlage der voraussichtlichen Abfahrtszeit des Fahrers zu einem bestimmten Parksektor weiter. Das digitale System informiert auch potenzielle Kunden über den Belegungsgrad und die Parktarife und gibt Informationen über Belegungsgrad und Parktarife an andere Parkhäuser weiter.

### Zusammenfassung

Der Erfindung liegt die Aufgabe zugrunde, ein verbessertes Verfahren zur Zufahrtskontrolle für Parkplätze vorzuschlagen, sowie ein entsprechendes System.

In einem Aspekt betrifft die Erfindung ein Verfahren zur Zufahrtskontrolle für Parkplätze gemäß Anspruch 1. Außerdem betrifft die Erfindung ein System zur Zufahrtskontrolle für Parkplätze gemäß Anspruch 8. Ferner betrifft die Erfindung ein Computerprogrammprodukt gemäß Anspruch 11.

Das Verfahren umfasst eine Bereitstellung eines Servers mit einem Stellplatz-Buchungsdienst. Bei dem Stellplatz-Buchungsdienst sind mehrere Fahrer und mehrere Parkplätze mit je ein bis mehreren Stellplätzen registriert. Jeder Parkplatz beinhaltet ein oder mehrere Zugangskontrollvorrichtungen - im Folgenden "ZKVs" bezeichnet. Der Stellplatz-Buchungsdienst weist jeder der ZKVs eindeutig ein Kontrollsystem, das in räumlicher Nähe zu der ZKV angebracht ist, zu. Zumindest einige der Kontrollsysteme sind jeweils dazu konfiguriert, permanent oder wiederholt ein kontaktloses Nahfeldsignal auszusenden, wobei das kontaktlose Nahfeldsignal eine ZKV-Kennung der dem Kontrollsystem zugewiesenen ZKV beinhaltet.

Bei Ankunft einer der Fahrer an einer ZKV eines der Parkplätze empfängt eine Instanz einer Stellplatz-Buchungs-App, die auf einem mobilen Telekommunikationsgerät des einen Fahrers ausgeführt wird, ein kontaktlos übertragenes Nahfeldsignal von dem dieser einen ZKV zugeordneten Kontrollsystem. Das Nahfeldsignal beinhaltet eine ZKV-Kennung, welche die eine ZKV identifiziert. Die Stellplatz-Buchungs-App Instanz sendet daraufhin die empfangene ZKV-Kennung und eine Fahrer-ID des Fahrers an den Stellplatz-Buchungsdienst. Das Senden erfolgt über ein Netzwerk, insbesondere über eine drahtlose Netzwerkverbindung, insbesondere über das Mobilfunknetz. In manchen Ausführungsformen sendet die Stellplatz-Buchungs-App des einen Fahrers die ZKV-Kennung mit der Fahrer-ID nicht sofort an den Buchungsdienst. Vielmehr zeigt die App nach Empfang des Nahfeldsignals zunächst eine GUI mit einem GUI Element an, die es dem Fahrer ermöglicht, das Senden der ZKV-ID mit der Fahrer-ID an den Dienst explizit zu veranlassen. Dies stellt sicher, dass die ZKV nicht geöffnet wird, ohne dass der Fahrer dies explizit wünscht und veranlasst. Der Fahrer muss zuerst durch eine Interaktion mit der Stellplatz-Buchungs-App interagieren um zu bestätigen, dass er eine Öffnung der ZKV wünscht. Erst danach sendet die App eine Nachricht mit der ZKV-Kennung und der Fahrer-ID an den Dienst.

Der Stellplatz-Buchungsdienst prüft, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet. Insbesondere kann die Prüfung auch eine Prüfung umfassen, ob für den durch die Fahrer-ID identifizierten Fahrer für einen Zeitraum, der die aktuelle Zeit umfasst, eine gültige Buchung vorliegt. Je nach Ausführungsform kann die Buchung eines Stellplatzes so erfolgen, dass dem Fahrer während des Buchungszeitraums ein bestimmter Stellplatz zugewiesen wird, oder so, dass dem Fahrer während des Buchungszeitraums das Recht eingeräumt wird, sich einen beliebigen freien Stellplatz auszusuchen. Entsprechend kann die Buchung wie auch die Prüfung auf das Vorliegen einer Buchung auf der Ebene des Parkplatzes oder auf der Ebene eines bestimmten Stellplatzes durchgeführt werden. Der Ausdruck "Buchung eines Stellplatzes" gemäß Ausführungsformen der Erfindung umfasst all diese Varianten und/oder Mischformen hiervon (z.B. stellplatzindividuelle Buchung an manchen Parkplätzen, reine parkplatzbezogene Buchung in anderen Parkplätzen ohne individuelles Stellplatzmanagement).

Falls die Prüfung ergibt, dass eine gültige Buchung vorliegt, sendet der Stellplatz-Buchungsdienst einen Befehl zur Zufahrtsgewährung an das Kontrollsystem, das der durch die ZKV-Kennung identifizierte ZKV zugewiesen ist.

In Antwort auf den Erhalt des Befehls zur Zufahrtsgewährung sendet das Kontrollsystem einen Steuerbefehl an die ihr zugeordnete ZKV um zu bewirken, dass die ZKV die Zufahrt auf den Parkplatz ermöglicht.

Dies kann vorteilhaft sein, da der Fahrer das Fahrzeug nicht verlassen muss, um die ZKV dazu zu veranlassen, die Zufahrt zum Parkplatz beim Vorliegen einer Buchung zu ermöglichen. Es ist noch nicht einmal erforderlich, eine Fensterscheibe herunterzulassen, um einen Berechtigungsnachweis in die Nähe eines Sensors zu bringen. Es ist vielmehr völlig ausreichend, dass ein Fahrer, für den für den aktuellen Zeitraum eine Buchung für einen Stellplatz auf einen bestimmten Parkplatz vorliegt, sich innerhalb des Sendebereiches des zu der ZKV gehörenden Kontrollsystems befindet und auf seinem Smartphone die Stellplatz-Buchung-App das Nahfeldsignal des Kontrollsystems empfängt. Optional kann noch eine manuelle Bestätigung des Fahrers erforderlich sein, um zu veranlassen, dass der Befehl zur Zufahrtsgewährung von der App an das Kontrollsystem gesendet wird.

Ein weiterer Vorteil besteht darin, dass das Verfahren inhärent sicherstellt, dass nur ein Fahrer, der sich in unmittelbarer räumlicher Nähe zur ZKV und dem ihr zugeordneten Kontrollsystems befindet, die ZKV dazu veranlassen kann, die Zufahrt zu gewähren. Wäre es dem Fahrer möglich, durch einen entsprechenden Steuerbefehl über die App von einer beliebigen Position aus beispielsweise ein Zufahrtstor zu öffnen, ein Rolltor in Bewegung zu versetzen oder Poller zu senken, um die Zufahrt zu ermöglichen, besteht für Dritte ein erhebliches Verletzungsrisiko. Die Zufahrten zu Parkplätzen, insbesondere zu Lkw-Parkplätzen, sind oftmals durch große und entsprechend schwere mechanische Türen und Tore geschützt. Beispielsweise kann es sich bei den Parkplätzen um Lkw-Parkplätze von Speditionen handeln, die ihr Firmengelände durch schwere Metalltore davor schützen, dass Unberechtigte Zufahrt bzw. Zutritt haben. Würden derartig schwere mechanische Bauelemente bewegt, ohne dass sichergestellt ist, dass ein Fahrer in der Nähe anwesend ist und die Lage überblicken kann, besteht die Gefahr, dass Personen durch die Bewegung dieser Tore oder Türen verletzt oder eingeklemmt werden. Außerdem besteht bei einer Öffnung der Zufahrt über eine App eines weit entfernt befindlichen Fahrers die Gefahr, dass sich unberechtigte Personen unbemerkt Zufahrt oder Zutritt zu dem Parkplatz verschaffen. Dies stellt ein Sicherheitsrisiko für andere Fahrer bzw. deren Fracht dar, die sich auf dem Parkplatz befinden. Gemäß Ausführungsformen der Erfindung werden diese Sicherheitsprobleme auf zuverlässige Weise dadurch verhindert, dass ohne den Empfang des kontaktlosen Nahfeldsignals mit der ZKV-Kennung durch die App diese App auch keine Nachricht mit der ZKV-Kennung und der Fahrer-ID an den Stellplatz-Buchungs-Dienst Strichdienst sendet und also auch keine Prüfung der Buchung durchgeführt und kein Befehl zur Ermöglichung der Zufahrt erzeugt wird.

Bei den Parkplätzen kann es sich jeweils z.B. um einen PKW-Parkplatz mit mehreren PKW-Stellflächen handeln. Vorzugsweise handelt es sich um einen LKW-Parkplatz, z.B. ein Speditionsgelände oder sonstiges zufahrtsgeschütztes Gelände mit mehreren LKW Stellplätzen. Im Kontext von Lkw-Stellplätzen ist das Verfahren gemäß Ausführungsformen der Erfindung besonders vorteilhaft, denn hier sind die oben genannten Sicherheitsaspekte besonders vordringlich: zum einen sind die Tore von Lkw-Parkplätzen besonders groß, ein Verletzungsrisiko Dritter beim Bewegen dieser Tore entsprechend hoch. Zum anderen sind die Schäden bei Diebstahl, wenn zum Beispiel Unberechtigte unbemerkt durch ein geöffnetes Tor auf den Parkplatz gelangen, besonders hoch.

Gemäß einer Ausführungsform sendet der Stellplatz-Buchungsdienst den Befehl zur Zufahrtsgewährung sofort an das Kontrollsystem, nachdem die Prüfung das Vorliegen einer gültigen Buchung ergibt.

Gemäß einer anderen Ausführungsform sendet der Stellplatz-Buchungsdienst zunächst eine Bestätigungs-Aufforderung an die Stellplatz-Buchungs-App des einen Fahrers. Die Stellplatz-Buchungs-App ist dazu konfiguriert, die Bestätigungs-Aufforderung über eine Nutzer-Schnittstelle des mobilen Telekommunikationsgeräts, z.B. über eine Anzeige, an den einen Fahrer auszugeben. Die Ausgabe geschieht so, dass der eine Fahrer der Aufforderung nachkommen kann. Beispielsweise kann die Aufforderung zusammen mit einem auswählbaren GUI-Element (z.B. Button, Checkbox, Link, etc.) ausgegeben werden, sodass der Nutzer durch Auswahl dieses GUI Elements bestätigen kann, dass der Befehl zur Zufahrtsgenehmigung jetzt gesendet werden soll.

Nach Ausführungsformen der Erfindung umfasst das Verfahren die Verwendung der Stellplatz-Buchungs-App oder einer Web-Applikation, um einen der Stellplätze für einen der registrierten Fahrer zu buchen. Die Buchung erfolgt typischerweise für einen bestimmten Zeitraum, also zum Beispiel für die Dauer einer Nacht. Die Buchung kann, muss aber nicht vom Fahrer durchgeführt werden. Beispielsweise kann der Fahrer im Laufe der Fahrt selbst entscheiden, an welchem Parkplatz er pausieren möchte und hierfür die Stellplatz-Buchungs-App seines Smartphones nutzen. Es ist aber auch möglich, dass beispielsweise der Arbeitgeber, zum Beispiel ein Speditionsunternehmen, über die Stellplatz-Buchungs-App auf dem Smartphone eines Angestellten oder über eine Webapplikation, die im Browser eines sonstigen Computers dieses Angestellten angezeigt wird, die Buchung für den Fahrer durchführt.

Die Buchung bewirkt, dass der Stellplatz-Buchungs-Dienst, der Zugriff auf ein Verzeichnis aller beim Buchungsdienst registrierten Fahrer und Stellplätze hat, eine neue Buchung erstellt und speichert. Jede Buchung ist eine Zuweisung eines Stellplatzes (und damit implizit auch eines Parkplatzes, auf dem sich der Stellplatz befindet), eines Fahrers und eines Zeitraums, für welchen die Buchung gültig ist. Die Zuweisung kann beispielsweise in einen elektronischen Speichermedium eines Servers gespeichert sein, auf welchen der Stellplatz-Buchungsdienst Zugriff hat. Beispielsweise kann die Buchung in Form eines Datensatzes einer relationalen Datenbank gespeichert sein.

Erfindungsgemäß ist es möglich, eine Verfahrensvariante durchzuführen, wonach nach einer erfolgreichen Buchung eines Stellplatzes für den einen Fahrer ein graphischer Code erzeugt wird. Der grafische Code kann zum Beispiel von der Stellplatz-Buchungs-App des einen Fahrers oder von dem Stellplatz-Buchungs-Dienst erzeugt werden. Bei dem grafischen Code kann es sich zum Beispiel um einen Barcode oder einen 2D Code, insbesondere einen Matrixcode, z.B. einen QR-Code handeln. In dem Code sind die Buchungsdaten, insbesondere Fahrer-ID, Stellplatz-ID und der Buchungszeitraum, typischerweise auch weitere Angaben wie zum Beispiel Parkplatz-ID, Ausstattung des Stellplatzes bzw. Parkplatzes, gebuchte Serviceleistungen, Angaben zur Person des Fahrers, etc., codiert. Alternativ dazu kann in dem Code auch lediglich ein Verweis auf diese Buchungsdaten codiert sein, zum Beispiel ein Link, der zu einem Datensatz führt, der von dem Stellplatz-Buchungs-Dienst verwaltet und bei Auswahl des Links bereitgestellt wird.

Dieser graphische Code wird nun an den Fahrer in Form eines Ausdrucks oder eines über die Stellplatz-buchungs-App anzeigbaren digitalen Bildes bereitgestellt.

Beispielsweise kann ein Angestellter einer Spedition die Buchung für einen bestimmten Fahrer vor Fahrtantritt des Fahrers vornehmen und dem Fahrer einen Ausdruck mit den Buchungsdetails einschließlich eines QR-Codes, der den grafischen Code repräsentiert, aushändigen. Alternativ dazu kann dieser Angestellte oder der Fahrer selbst die Buchung auch über die Stellplatz-Buchungs-App vornehmen. Vorzugsweise bewirkt jede Buchung für einen bestimmten Fahrer, dass ein entsprechender graphischer Code erzeugt wird, in welchem die Buchungsdaten oder ein Verweis auf die Buchungsdaten codiert sind. Der grafische Code wird an die Stellplatz-Buchungs-App des Fahrers, für welchen die Buchung vorgenommen wurde, übermittelt und in der App gespeichert. Die Stellplatz-Buchungs-App ist dazu ausgebildet, den grafischen Code über eine elektronische Anzeige des mobilen Telekommunikationsgeräts, auf dem die App instanziiert ist, auszugeben.

Die Erzeugung und Ausgabe eines grafischen Codes in Form eines Ausdrucks kann vorteilhaft sein, da der Fahrer hierdurch unabhängig wird von der Verfügbarkeit seines mobilen Telekommunikationsgeräts ist. Falls beispielsweise der Akku des Smartphones komplett entladen ist, das Smartphone verloren wurde oder aus sonstigen Gründen im Moment nicht verfügbar ist, kann es hilfreich sein, zusätzlich einen Ausdruck des graphischen Codes mitzuführen, da dies es dem Fahrer ermöglicht, sich trotzdem Zufahrt zu dem gebuchten Stellplatz zu verschaffen.

Ein weiterer wichtiger Vorteil der Verwendung von grafischen Codes (in elektronischer Form auf dem Smartphone wie auch als Ausdruck) im Kontext der Zufahrtsverschaffung zu Parkplätzen besteht darin, dass der Fahrer sich auch dann Zufahrt verschaffen kann, wenn im Bereich des Parkplatzes keine Verbindung zum Mobilfunknetz möglich ist. Im normalen Betriebsmodus empfängt die Stellplatz-Buchungs-App das Nahfeldsignal mit der ZKV-Kennung von dem Kontrollsystem an der Zufahrt des Parkplatzes und sendet die ZKV-Kennung zusammen mit einer Fahrer ID über das Mobilfunknetz an den Stellplatz-Buchungsdienst, um diesen zur Prüfung der Buchung zu veranlassen, und implizit auch, um dem Dienst mitzuteilen, dass der Fahrer nun vor Ort ist, was durch die Bereitstellung der ZKV-Kennung bewirkt wird. Wenn jedoch keine Verbindung zu Mobilfunknetz hergestellt werden kann, können auch die nachfolgenden Schritte der Prüfung der Buchung durch den Dienst und die Übermittlung eines entsprechenden Befehls an das Kontrollsystem der ZKV, die ZKV zu veranlassen, die Zufahrt zu ermöglichen, nicht durchgeführt werden. Gerade in ländlichen Regionen bestehen in Deutschland aber noch viele Lücken im Mobilfunknetz, sodass die Gefahr besteht, dass bei manchen Parkplätzen das oben beschriebene Verfahren nicht durchgeführt werden kann wegen einer fehlenden Mobilfunkverbindung. Durch Bereitstellung des graphischen Codes an den Fahrer in Form eines Ausdrucks oder in Form eines elektronischen Codes, der in der Stellplatz-Buchungs-App des Fahrers gespeichert wird, kann sichergestellt werden, dass der Fahrer sich notfalls auch mithilfe dieses grafischen Codes Zufahrt zum Parkplatz mit dem gebuchten Stellplatz verschaffen kann. Die Übertragung des graphischen Codes an die App kann zum Beispiel zu einem Zeitpunkt erfolgen, wenn das Smartphone des Fahrers über das Mobilfunknetz oder zum Beispiel das WLAN eine Verbindung zum Internet hat.

Das eine Kontrollsystem, das der einen ZKV an der der Fahrer ankommt, zugewiesen ist, beinhaltet einen optischen Sensor zur Erfassung des graphischen Codes. Nach manchen Ausführungsformen beinhalten mehrere oder sogar alle Kontrollsysteme der Parkplätze, die bei dem Stellplatz-Buchungsdienst registriert sind, den optischen Sensor.

Das eine Kontrollsystem (oder mehrere oder alle der Kontrollsysteme) ist also ausgebildet zur Bereitstellung eines auf dem graphischen Code basierenden alternativen Verfahrens zur Zufahrtskontrolle für den einen Parkplatz. Das alternative Verfahren umfasst ein Erfassen des graphischen Codes durch den optischen Sensor bei Ankunft des Fahrers an der einen ZKV und eine Ermöglichung der Zufahrt für den Fahrer zu dem einen Parkplatz in Abhängigkeit von dem graphischen Code.

Beispielsweise hält der Fahrer bei Ankunft an der einen ZKV einen Ausdruck oder das Display seines mobilen Telekommunikationsgeräts mit dem graphischen Code in den Erfassungsbereich des optischen Sensors (zum Beispiel Kamera oder Videokamera) des Kontrollsystems, das dieser ZKV zugewiesen ist. Der erfasste grafische Code wird nun von dem Kontrollsystem an den Stellplatz-Buchungsdienst übermittelt, der eine Prüfung der Buchung analog zu dem bereits beschriebenen, von der App über eine Mobilfunkverbindung eingeleiteten Prüfverfahren durchführt. In dem Code sind nämlich die Buchungsdaten bzw. ein Verweis auf die Buchungsdaten, aus welchen neben der ZKV-Kennung auch die Fahrer ID und der Zeitraum hervorgeht, enthalten, sodass der Buchungsdienst alle zur Prüfung notwendigen Daten verfügbar hat. Außerdem hat der Fahrer dadurch, dass er den grafischen Code in den Erfassungsbereich des optischen Sensors einführen muss, ebenfalls bewiesen, dass der Fahrer vor Ort ist. Es ist also sichergestellt, dass der Fahrer zum Beispiel ein Tor zu einem Parkplatz nur dann öffnen kann, wenn er sich unmittelbar vor dem Parkplatz befindet und also sehen kann, ob die Öffnung des Tores eine Gefahr für umstehende Personen darstellt oder ob sich in der Nähe Personen befinden, die eine kurzzeitige Öffnung des Tores nutzen könnten, um unberechtigterweise den Parkplatz zu betreten.

Nach bevorzugten Ausführungsformen wird der von dem Kontrollsystem erfasste grafische Code von dem Kontrollsystem über eine Netzwerkverbindung mit gesicherter Verfügbarkeit, z.B. kabelgebunden, per WLAN oder per sicher verfügbarer Mobilfunkverbindung, an den Stellplatz-Buchungsdienst übermittelt. Bei der Mobilfunkverbindung kann es sich insbesondere um eine Mobilfunkverbindung handeln, die auf dem GSM, LTE oder UMTS Standard beruhen. Insbesondere kann es sich bei der Mobilfunkverbindung, die zum Datenaustausch (z.B. Senden des graphischen Codes, Empfang von Befehlen) zwischen Kontrollsystem und Buchungsdienst verwendet wird, um eine GSM Verbindung handeln. Bei dieser vom Kontrollsystem verwendeten Mobilfunkverbindung handelt es sich um eine Mobilfunkverbindung, von welcher bekannt ist, dass diese im Bereich des Parkplatzes, der das jeweilige Kontrollsystem beinhaltet, in hinreichender Stärke und Stabilität verfügbar ist. Es kann sich dabei um eine andere Mobilfunkverbindung handeln als die, die der Fahrer zum Datenaustausch zwischen der Buchungs-App und dem Buchungsdienst nutzt.

Die Netzwerkverbindung, über welche das Kontrollsystem und der Stellplatzbuchungsdienst Daten (insb. optischer Code und Befehle) austauschen, ist gemäß bevorzugter Ausführungsformen als "Netzwerkverbindung mit gesicherter Verfügbarkeit" ausgebildet. Unter einer "Netzwerkverbindung mit gesicherter Verfügbarkeit" wird hier eine oder mehrere der folgenden Netzwerkverbindungen verstanden: a) zumindest im Bereich des Parkplatzes kabelgebundene Netzwerkverbindung; b) eine WLAN-Verbindung; c) eine Mobilfunkverbindung, von welcher bekannt ist, dass diese in hinreichender Stärke und mit hinreichender Ausfallsicherheit im Bereich des Parkplatzes, der das Kontrollsystem beinhaltet, verfügbar ist.

Die hinreichende Stärke und Verfügbarkeit der vorgenannten Verbindungstypen a), b) und c) hängt von den Erfordernissen des jeweiligen Anwendungsszenarios ab. Nach Ausführungsformen wird eine kabelgebundene Verbindung und eine WLAN-Verbindung generell als Verbindungstyp mit hinreichender (Signal-)Stärke und hinreichender Ausfallsicherheit angesehen. Gemäß Ausführungsformen gilt eine Netzwerkverbindung gemäß a), b) oder c) dann als "Netzwerkverbindung mit gesicherter Verfügbarkeit", wenn eine übers Jahr gemittelte Verfügbarkeit von mindestens 23,5 Stunden pro Tag gewährleistet wird. Vorzugsweise werden hier Ausfälle aufgrund von Hardwaredefekten (defekter Router, defektes GSM Modul) nicht berücksichtigt. Bei der Netzwerkverbindung mit gesicherter Verfügbarkeit kann es sich um eine Mobilfunkverbindung handeln, die von einem anderen Mobilfunknetzanbieter bereitgestellt wird als diejenige Mobilfunkverbindung, die von dem Smartphone des Fahrers zum Datenaustausch über das Internet verwendet wird.

Die Ermöglichung der Zufahrt in Abhängigkeit von dem erfassten graphischen Code umfasst:
- Senden des erfassten graphischen Codes vom optischen Sensor über ein Netzwerk an den Stellplatz-Buchungsdienst; bei dem Netzwerk kann es sich insbesondere um das Internet handeln; hierbei sendet das Kontrollsystem, das den optischen Sensor beinhaltet, den grafischen Code vorzugsweise über eine Netzwerkverbindung mit gesicherter Verfügbarkeit an den Stellplatz-Buchungsdienst;
- Prüfung, durch den Stellplatz-Buchungsdienst, ob eine in dem graphischen Code spezifizierte oder durch den graphischen Code identifizierte Buchung für diesen einen Fahrer gültig ist; beispielsweise kann der grafische Code empfangen und dekodiert werden, sodass die in dem Code gespeicherten Identifikatoren des Fahrers und des Stellplatzes sowie der Buchungszeitraum verglichen werden können mit den in einer Buchungsdatenbank des Stellplatz-Buchungsdienstes hinterlegten Buchungen; wird in der Buchungsdatenbank eine Buchung mit den gleichen Angaben bezüglich Fahrer, Stellplatz und Buchungszeitraum gefunden wie in dem graphischen Code codiert ist, ist das Ergebnis der Prüfung, dass eine gültige Buchung vorliegt; andernfalls liegt keine gültige Prüfung vor;
- Nur falls eine gültige Buchung vorliegt, Senden eines Befehls zur Zufahrtsgewährung vom Stellplatz-Buchungsdienst an das Kontrollsystem; vorzugsweise wird der Befehl ebenfalls über das oben beschriebene Netzwerk, zum Beispiel das Internet, an das Kontrollsystem gesendet; der Versand des Befehls kann zum Beispiel unmittelbar nach der Feststellung, dass eine gültige Buchung vorliegt, an das Kontrollsystem gesendet werden;
- in Antwort auf den Erhalt des Befehls zur Zufahrtsgewährung, Senden eines Steuerbefehls von dem Kontrollsystem an das ihr zugeordneten ZKV um zu bewirken, dass die ZKV die Zufahrt auf den Parkplatz ermöglicht.

Nach Ausführungsformen der Erfindung umfasst der eine Parkplatz, an dessen einer ZKV der Fahrer ankommt, eine weitere ZKV. Die weitere ZKV beschränkt den Zutritt zu einer Räumlichkeit innerhalb des Parkplatzes. Bei der Räumlichkeit kann es sich um Räumlichkeiten verschiedener Art handeln, zum Beispiel um ganze Gebäude, Gebäudeteile oder einzelne Räume. Es kann sich bei der Räumlichkeit auch um einen der Stellplätze handeln, der in diesem Fall durch eine eigene ZKV geschützt ist. Es kann sich bei der Räumlichkeit um sanitäre Einrichtungen, einen Lagerraum, eine Räumlichkeit mit einer Tankgelegenheit oder einem Lager mit Treibstoff, einen Ersatzteileraum oder dergleichen handeln. Der weiteren ZKV ist ein weiteres Kontrollsystem zugewiesen ist und das weitere ZKV ist in räumlicher Nähe zu der weiteren ZKV angebracht. Das weitere Kontrollsystem beinhaltet einen optischen Sensor zur Erfassung eines graphischen Codes. Das weitere Kontrollsystem ist ausgebildet zur Bereitstellung eines code-basierten Verfahrens zur Zutrittsgewährung zu der Räumlichkeit. Das Kontrollsystem, welches der weiteren ZKV zugewiesen ist und über diese den Zutritt zu der Räumlichkeit steuert kann, muss aber nicht einen Sender für das Emittieren eines kontaktlosen Nahfeldsignals beinhalten. Da das weitere Kontrollsystem nur den Zutritt zu der Räumlichkeit, nicht aber die Zufahrt zu dem Parkplatz kontrolliert, ist der Vorteil, dass auf Basis des Nahfeldsignals eine Zufahrtsgewährung erreicht werden kann, ohne dass der Fahrer das Fahrerhaus verlässt, weniger wichtig. Wenn der Fahrer das weitere Kontrollsystem erreicht, hat der ohnehin das Fahrzeug bereits verlassen. Insofern können gemäß Ausführungsformen der Erfindung zumindest einige der Kontrollsysteme innerhalb eines Parkplatz, die nur zur Kontrolle des Zutritts zu einzelnen Räumlichkeiten innerhalb dieses Parkplatzes dienen, lediglich einen optischen Sensor zur Erfassung des graphischen Codes beinhalten, nicht jedoch einen Sender für das Kontaktlose Nahfeldsignal.

Das code-basierte Verfahren zur Zutrittsgewährung durch die weitere Kontrolleinheit umfasst:
- Bei Ankunft des Fahrers an dem weiteren Kontrollsystem: Erfassen des graphischen Codes durch den optischen Sensor des weiteren Kontrollsystems und Ermöglichung des Zutritts für den Fahrer in die Räumlichkeit in Abhängigkeit von dem graphischen Code. Beispielsweise hält der Fahrer den grafischen Code in Form eines papierbasierten Ausdrucks oder in Form eines auf einem Display eines Smartphones des Fahrers angezeigten digitalen Bildes in den Erfassungsbereich des optischen Sensors des weiteren Kontrollsystems;

Nach Ausführungsformen umfasst die Ermöglichung des Zutritts in die Räumlichkeit in Abhängigkeit von dem erfassten graphischen Code:
- Senden des erfassten graphischen Codes vom optischen Sensor des weiteren Kontrollsystems über ein Netzwerk an den Stellplatz-Buchungsdienst; bei dem Netzwerk kann es sich insbesondere um das Internet handeln, wobei das weitere Kontrollsystem, das den optischen Sensor beinhaltet, den grafischen Code vorzugsweise über eine Netzwerkverbindung mit gesicherter Verfügbarkeit an den Stellplatz-Buchungsdienst sendet;
- Prüfung, durch den Stellplatz-Buchungsdienst, ob eine in dem graphischen Code spezifizierte oder durch den graphischen Code identifizierte Buchung für diesen einen Fahrer gültig ist; beispielsweise kann der grafische Code empfangen und dekodiert werden, sodass die in dem Code gespeicherten Identifikatoren des Fahrers und des Stellplatzes sowie der Buchungszeitraum verglichen werden kann mit den in einer Buchungsdatenbank des Stellplatz-Buchungsdienstes hinterlegten Buchungen; wird in der Buchungsdatenbank eine Buchung mit den gleichen Angaben bezüglich Fahrer, Stellplatz und Buchungszeitraum gefunden wie in dem graphischen Code codiert ist, ist das Ergebnis der Prüfung, dass eine gültige Buchung vorliegt; andernfalls liegt keine gültige Prüfung vor;
- Nur falls eine gültige Buchung vorliegt, Senden eines Befehls zur Zufahrtsgewährung vom Stellplatz-Buchungsdienst an das weitere Kontrollsystem; vorzugsweise wird der Befehl ebenfalls über das oben beschriebene Netzwerk, zum Beispiel das Internet, an das weitere Kontrollsystem gesendet; der Versand des Befehls kann zum Beispiel unmittelbar nach der Feststellung, dass eine gültige Buchung vorliegt, an das weitere Kontrollsystem gesendet werden;
- in Antwort auf den Erhalt des Befehls zur Zutrittsgewährung in die Räumlichkeit, Senden eines Steuerbefehls von dem weiteren Kontrollsystem an die ihr zugeordnete weitere ZKV um zu bewirken, dass die ZKV den Zutritt zu der Räumlichkeit ermöglicht. Bei der weiteren ZKV kann es sich zum Beispiel um eine Tür zu einer sanitären Anlage innerhalb des Parkplatzes handeln. Die Tür kann zum Beispiel einen Türgriff oder Türzylinder beinhalten, der mittels eines Funksignals von der weiteren Kontrolleinheit gesteuert und von dem geschlossenen in den offenen Zustand überführt werden kann.

Nach Ausführungsformen der Erfindung beinhaltet jedes der Kontrollsysteme eine Netzwerkschnittstelle, insbesondere eine Netzwerkschnittstelle für eine Netzwerkverbindung mit gesicherter Verfügbarkeit, zur Übermittlung von Daten, insbesondere des graphischen Codes, an den Stellplatz-Buchungs-Dienst und zum Empfang von Befehlen zur Zufahrtsgewährung und/oder Zutrittsgewährung von dem Stellplatz-Buchungs-Dienst.

Dies kann vorteilhaft sein, da der grafische Code mit dem optischen Sensor der Kontrollsysteme gemäß Ausführungsformen der Erfindung als alternatives Verfahren zur Zufahrtskontrolle bzw. Zutrittskontrolle insbesondere dann Verwendung findet, wenn die Stellplatz-Buchungs-App des Fahrers nicht über eine Mobilfunkverbindung Daten mit dem Stellplatz-Buchungsdienst austauschen kann. Dadurch, dass der grafische Code von dem Kontrollsystem mittels einer Netzwerkverbindung mit gesicherter Verfügbarkeit (z.B. Datenkabel, insb. Ethernet-Kabels, WLAN oder über ein GSM Netz von dem eine verlässliche Verfügbarkeit bekannt ist) mit dem Internet und dem Stellplatz-Buchungsdienst verbunden ist, ist diese Datenübertragungskanal gemäß Ausführungsformen der Erfindung völlig unabhängig von dem Vorhandensein der Mobilfunkverbindung, die das Smartphone des Fahrers zum Datenaustausch nutzt.

Zusätzlich oder alternativ dazu umfasst jedes der Kontrollsysteme oder zumindest einige der Kontrollsysteme, eine kontaktlose Schnittstelle, insbesondere eine Funkschnittstelle, zum Senden von Steuerbefehlen an die dem Kontrollsystem jeweils zugeordnete ZKV.

Dies kann vorteilhaft sein, weil eine bauliche Trennung von Kontrollsystem und ZKV realisiert wird. ZKV und das dieser zugewiesene Kontrollsystem tauschen lediglich per Funk Daten aus, sie sind vorzugsweise mechanisch nicht aneinander gekoppelt und/oder repräsentieren jeweils zwei unterschiedliche physische Objekte. Dies bedeutet, dass im Prinzip jegliche ZKV, also jegliche bestehende Tür, jegliches bestehende Tor oder sonstige bestehende Verriegelungsvorrichtung, sofern sie nur eine per Funk steuerbare Klinke oder einen per Funk steuerbaren Zylinder beinhaltet, dadurch in den Stellplatz-Buchungsdienst integriert werden kann, dass in hinreichender räumlicher Nähe zu dieser ZKV ein ihr zugeordnetes Kontrollsystem installiert wird, welches die ZKV-zum Beispiel per Funk- steuern kann. In dem Kontrollsystem kann eine hier als ZKV-Kennung bezeichnete eindeutige Kennung der ZKV gespeichert sein, wobei die ZKV-Kennung auch zur Registrierung der ZKV beim Stellplatz-Buchungsdienst verwendet wird.

Zwar werden gemäß Ausführungsformen der Erfindung Daten auf komplexe Weise zwischen Stellplatz-Buchungsdienst, Stellplatz-Buchungs-App und den Kontrollsystemen ausgetauscht, all diese Elemente betreffen jedoch nicht Eigenschaften und Schnittstellen von Hardware, die auf den jeweiligen Parkplätzen in Form der ZKVs gegebenenfalls schon vorhanden ist. Dies macht das besonders leicht, Parkplätze in den Stellplatz-Buchungsdienst zu integrieren, ohne dass hierfür größere Investitionen in neue Türen oder Tore erforderlich sind, solange diese zum Beispiel nur per Funk ansteuerbar sind. Eine App auf ein Smartphone eines Fahrers zu laden erfordert keinerlei Aufwand von Seiten des Betreibers eines Parkplatzes. Ein Parkplatzbetreiber muss lediglich dafür sorgen, dass an jeder relevanten ZKV seines Parkplatzes ein entsprechendes Kontrollsystem installiert wird, welches die ZKV steuern kann, vorzugsweise per Funk. Die ZKV wird also in funktionaler Hinsicht durch das ihr zugeordnete Kontrollsystem in den Dienst integriert. Das Kontrollsystem kann als kleine Box ausgebildet sein, deren Herstellung und Installation einfach und kostengünstig realisiert werden kann. Dies ist im Kontext von Lkw-Parkplätzen besonders vorteilhaft, da hier in Deutschland zu wenig Stellplätze existieren und Lastwagenfahrer daher oft weite zusätzliche Strecken entlang oder gar abseits der Autobahnen in Kauf nehmen müssen, um einen geeigneten Ruheplatz zu finden. Ein Ausbau weiterer Parkplätze ist teuer und aufgrund Platzmangels oftmals gar nicht möglich. Ausführungsformen der Erfindung machen es möglich, Parkplatz- bzw. Stellplatzkapazitäten von Firmen, insbesondere Speditionen, auf effizientere Weise zu nutzen, indem diese Parkplätze durch Installation von einem oder mehreren der hier beschriebenen Kontrollsysteme und durch Vergabe und Registrierung ZKV-Kennungen der von den Kontrollsystemen kontrollierten ZKVs über die Stellplatz-Buchungs-App auch anderen Fahrern zur Verfügung gestellt wird. Auch die Inhaber der Parkplätze können auf vielfältige Weise davon profitieren, ihre Stellflächen für den Dienst zur Verfügung zu stellen, zum Beispiel über Vermietungsgebühren an den Stellplätzen und/oder dadurch, dass die eigenen Fahrer zu ähnlichen Konditionen auf den Parkplätzen anderer Firmen übernachten dürfen, ohne dass die Inhaber der Parkplätze hierfür selber eine IT-Infrastruktur zur Vermietung der Stellplätze aufbauen müsste.

Nach Ausführungsformen der Erfindung ist das Nahfeldsignal ausgewählt aus einer Gruppe umfassend ein Funksignal, ein per WLAN übermitteltes Signal, ein BlueTooth Signal, ein NFC Signal, ein RFID Signal, ein iBeacon-Signal.

Nach Ausführungsformen der Erfindung handelt es sich bei dem Nahfeldsignal um ein kontaktlos übermitteltes Signal mit einer Reichweite von weniger als 30 m, vorzugsweise von weniger als 20 m.

Nach Ausführungsformen der Erfindung handelt es sich bei dem Fahrzeug um einen Pkw und bei dem einen Parkplatz um einen Pkw Parkplatz.

Nach bevorzugten Ausführungsformen handelt es sich bei dem Fahrzeug um einen Lkw und bei dem einen Parkplatz um einen Lkw Parkplatz.

Gemäß manchen Ausführungsformen sind bei den Stellplatz-Buchungsdienst eine Vielzahl von Parkplätzen registriert, wobei es sich bei den Parkplätzen um Pkw-Parkplätze oder um Lkw-Parkplätze oder um eine Mischung von Pkw und Lkw-Parkplätzen handelt. Nach Ausführungsformen ist der Stellplatz-Buchungsdienst dazu konfiguriert, im Zuge der Buchung den Fahrzeugtyp zu berücksichtigen, also zum Beispiel Pkw-Parkplätze nur ein PKWs und Lkw-Parkplätze nur an LKWs zu vergeben.

Bei den ein oder mehreren Zugangskontrollvorrichtungen, die auf jedem der bei dem Stellplatz-Buchungsdienst registrierten Parkplätze vorhanden sein können, kann es sich zum Beispiel um eine Tür, um ein Tor, einen Türverrigelungsmechanismus, einen Torverrigelungsmechanismus, einen versenkbaren Poller oder eine Kombination mehrerer dieser Objekte handeln. Es können auf einem Parkplatz mehrere unterschiedliche ZKV-Typen zum Einsatz kommen, z.B. ein großes Tor als ZKV zur Kontrolle der Parkplatzzufahrt und eine Tür zur Kontrolle des Zutritts zu den Sanitäranlagen.

In einem weiteren Aspekt betrifft die Erfindung ein System zur Zufahrtskontrolle für Parkplätze. Das System umfasst einen Server mit einem Stellplatz-Buchungsdienst. Bei dem Stellplatz-Buchungsdienst sind mehrere Fahrer und mehrere Parkplätze mit je ein bis mehreren Stellplätzen registriert. Jeder Parkplatz beinhaltet ein oder mehrere Zugangskontrollvorrichtungen - im Folgenden "ZKVs" bezeichnet, wobei der Stellplatz-Buchungsdienst jeder der ZKVs ein Kontrollsystem, das in räumlicher Nähe zu der ZKV angebracht ist, eindeutig zuweist. Zumindest einige der Kontrollsysteme sind jeweils dazu konfiguriert, permanent oder wiederholt ein kontaktloses Nahfeldsignal auszusenden. Das kontaktlose Nahfeldsignal beinhaltet eine ZKV-Kennung der dem Kontrollsystem zugewiesenen ZKV.

Das System umfasst auch eines der Kontrollsysteme, das einem ZKV eines der Parkplätze zugeordneten ist. Das eine Kontrollsystem ist dazu konfiguriert, permanent oder wiederholt das kontaktlose Nahfeldsignal auszusenden. Es ist auch möglich, dass das System mehrere der Kontrollsysteme beinhaltet, z.B. alle Kontrollsysteme eines Parkplatzes oder alle Kontrollsysteme mehrerer Parkplätze.

Das System umfasst ein mobiles Telekommunikationsgerät eines der Fahrer. Das mobile Telekommunikationsgerät beinhaltet eine Instanz einer Stellplatz-Buchungs-App. Die Stellplatz-Buchungs-App ist ausgebildet zum Empfangen eines der kontaktlos übertragenen Nahfeldsignale von dem einem Kontrollsystem bei Ankunft des einen Fahrer an der einen ZKV, wobei das kontaktlos übertragene Nahfeldsignal eine ZKV-Kennung der einen ZKV beinhaltet. Die Stellplatz-Buchungs-App ist außerdem ausgebildet zum Senden der empfangenen ZKV-Kennung und einer Fahrer-ID des Fahrers an den Stellplatz-Buchungsdienst über ein Netzwerk.

Der Stellplatz-Buchungsdienst ist dazu ausgebildet, zu prüfen, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet. Nur falls eine gültige Buchung vorliegt, sendet der Stellplatz-Buchungsdienst einen Befehl zur Zufahrtsgewährung an das eine Kontrollsystem. Das eine Kontrollsystem ist dazu ausgebildet, in Antwort auf den Erhalt des Befehls zur Zufahrtsgewährung, einen Steuerbefehl von dem Kontrollsystem an das eine ihr zugeordneten ZKV zu senden um zu bewirken, dass die ZKV die Zufahrt auf den Parkplatz ermöglicht.

Erfindingsgemäß beinhaltet das eine Kontrollsystem, das der einen ZKV zugewiesen ist, einen optischen Sensor zur Erfassung eines graphischen Codes. Der graphische Code kann z.B. als ein auf einer Anzeige angezeigtes digitales Bild oder als Ausdruck vorliegen.

Der Stellplatz-Buchungsdienst ist eine Softwareapplikation, die beispielsweise auf Basis von PHP und der Symfony Softwarebibliothek implementiert sein kann. Die Buchungs-App des Fahrers kann (z.B. für Android-Systeme) als Java-Applikation realisiert sein und das Webportal, über welches beispielsweise eine Spedition eine Buchung für einen ihrer Fahrer durchführen kann, kann z.B. mittels Java-Skript und verwandter webbasierter Technologien realisiert sein..

Das eine Kontrollsystem ist dazu ausgebildet, in Interoperation mit dem Stellplatz-Buchungsdienst ein auf dem graphischen Code basierendes alternatives Verfahren zur Zufahrtskontrolle für Parkplätze bereitzustellen. Das alternative Verfahren umfasst ein Erfassen des graphischen Codes durch den optischen Sensor bei Ankunft des Fahrers an der einen ZKV und ein Senden des erfassten graphischen Codes, vorzugsweise über eine Netzwerkverbindung mit gesicherter Verfügbarkeit an den Stellplatz-Buchungsdienst, um in Interoperation mit dem Server dem Fahrer im Falle einer gültigen Prüfung für einen Stellplatz des Parkplatzes die Zufahrt zu ermöglichen.

Nach Ausführungsformen verfügt jedes der Kontrollsysteme über eine kontaktlose Schnittstelle, insbesondere eine Funkschnittstelle, zum Senden von Steuerbefehlen an die dem Kontrollsystem jeweils zugeordnete ZKV.

Nach Ausführungsformen umfasst das System ein weiteres Kontrollsystem, das einer weiteren ZKV zugewiesen ist, und das sich in räumlicher Nähe zu der weiteren ZKV befindet. Der eine Parkplatz, an dessen einer ZKV der Fahrer ankommt, umfasst eine Räumlichkeit. Die weitere ZKV beschränkt den Zutritt zu der Räumlichkeit. Das weitere Kontrollsystem beinhaltet einen optischen Sensor zur Erfassung eines graphischen Codes. Das weitere Kontrollsystem beinhaltet einen optischen Sensor zur Erfassung des graphischen Codes, der als angezeigtes digitales Bild oder als Ausdruck vorliegt. Das weitere Kontrollsystem ist ausgebildet zur Bereitstellung eines Code-basierten Verfahrens zur Zutrittsgewährung zu der Räumlichkeit.

Das Code-basierte Verfahren umfasst ein Erfassen des graphischen Codes durch den optischen Sensor des weiteren Kontrollsystems bei Ankunft des Fahrers an dem weiteren Kontrollsystem. Das weitere Kontrollsystem ermöglicht in Interoperation mit dem Stellplatz-Buchungsdienst den Zutritt für den Fahrer in die Räumlichkeit in Abhängigkeit von dem graphischen Code.

Beispielsweise kann der Fahrer den graphischen Code (als Ausdruck oder über das Display seines Smartphones) in den Erfassungsbereich des optischen Sensors des weiteren Kontrollsystems halten, z.B. um sich Zutritt zu einem Sanitärbereich des Parkplatzes zu verschaffen.

Die hier für Ausführungsformen des Verfahrens beschriebenen Schritte offenbaren auch Eigenschaften der entsprechenden Systemkomponenten gemäß Ausführungsformen des erfinderischen Systems. Umgekehrt offenbaren die hierfür Komponenten des Systems beschriebenen Komponenten-Eigenschaften auch Aspekte der von diesen ausgeführten Verfahrensschritten.

In einem weiteren Aspekt betrifft die Erfindung ein Computerprogrammprodukt zur Zufahrtskontrolle für Parkplätze. Das Computerprogrammprodukt kann z.B. auf einem nicht-volatilen, verteilten Speichermedium verteilt gespeichert sein. Das Computerprogrammprodukt umfasst einen Stellplatz-Buchungsdienst und mindestens eine Stellplatz-Buchungs-App.

Der Stellplatz-Buchungsdienst beinhaltet ein Register. In dem Register Nutzerprofile mehrerer registrierter Fahrer und Datensätze mehrerer registrierter Parkplätze mit je ein bis mehreren Stellplätzen gespeichert sind, wobei jeder Parkplatz ein oder mehrere Zugangskontrollvorrichtungen - im Folgenden "ZKVs" bezeichnet - beinhaltet, wobei das Register des Stellplatz-Buchungsdienstes jeder der ZKVs ein Kontrollsystem, das in räumlicher Nähe zu der ZKV angebracht ist, eindeutig zuweist;

Die Stellplatz-Buchungs-App ist ausgebildet zum:
- Empfangen eines kontaktlos übertragenen Nahfeldsignals von dem einem der Kontrollsysteme bei Ankunft eines Fahrers, dessen Fahrer-ID in der Stellplatz-Buchungs-App gespeichert ist, an einer der ZKVs, wobei das kontaktlos übertragene Nahfeldsignal eine ZKV-Kennung der einen ZKV beinhaltet;
- Senden einer Nachricht mit der empfangenen ZKV-Kennung und der Fahrer-ID des Fahrers an den Stellplatz-Buchungsdienst über ein Netzwerk;

Der Stellplatz-Buchungsdienst ist ausgebildet zum:
- Prüfen, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet, vorliegt;
- Nur falls eine gültige Buchung vorliegt, Senden eines Befehls zur Zufahrtsgewährung an dasjenige der Kontrollsysteme das der einen ZKV zugewiesen ist.

Nach Ausführungsformen ist die Stellplatz-Buchungs-App ausgebildet zum:
- in Antwort auf eine Nachricht des Stellplatz-Buchungsdienstes, dass eine Buchung eines der Stellplätze für den einen Fahrer von der Stellplatz-Buchungs-App oder von einer anderen Applikation erfolgreich durchgeführt wurde, Erzeugen einer GUI mit Angaben zu der Buchung;
- Anzeige oder Aktivierung eines auswählbaren GUI-Element in der GUI so, dass der eine Fahrer das GUI Element auswählen kann, wobei die Anzeige oder Aktivierung des auswählbaren GUI-Elements bedeutet, dass dem Fahrer hierdurch die Möglichkeit gegeben wird, durch Auswahl des angezeigten oder aktivierten GUI-Elements das Senden einer ZKV-Öffnungs-Anfrage an den Stellplatz-Buchungsdienst zu veranlassen, wobei der Empfang der ZKV-Öffnungs-Anfrage den Stellplatz-Buchungsdienst dazu veranlasst, den Befehl zur Zufahrtsgewährung an das Kontrollsystem zu veranlassen, wobei die Anzeige oder Aktivierung des auswählbaren GUI-Elements erst dann erfolgt, wenn die Stellplatz-Buchungs-App beim Erreichen der ZKV das Nahfeldsignal mit der ZKV-Kennung dieser ZKV empfängt; und
- Senden der ZKV-Öffnungs-Anfrage an den Stellplatz-Buchungsdienst in Reaktion auf eine Auswahl des GUI-Elements durch den einen Fahrer.

Beispielsweise kann es sich bei der ZKV-Öffnungs-Anfrage um die Nachricht handeln, die die von der Buchungs-App empfangene ZKV-Kennung und die Fahrer-ID des Fahrers an den Stellplatz-Buchungsdienst sendet. Diese ZKV-Öffnungs-Anfrage bewirkt bei Vorliegen einer gültigen Buchung das Senden des Befehls zur Zufahrtsgewährung vom Stellplatz-Buchungsdienst an das Kontrollsystem und das Senden des Steuerbefehls zur Zufahrtsgewährung von dem Kontrollsystem an die ZKV.

In manchen Ausführungsformen kann eine Auswahl dieses GUI-Elements auch außerhalb des näheren Umgebung des Kontrollsystems das Senden einer ZKV-Öffnungs-Anfrage an den Buchungsdienst bewirken. Da in diesem Fall aber kein Nahfeldsignal empfangen wurde, enthält diese ZKV-Öffnungs-Anfrage die ZKV-Kennung nicht. Es handelt sich in diesem Fall um eine "unvollständige" ZKV-Öffnungs-Anfrage an den Buchungsdienst. Diese kann zwar ggf. ausgewertet werden z.B. im Hinblick darauf, ob eine Buchung noch gültig ist, sie kann aber nicht dazu führen dass der Buchungsdienst die ZKV über das ihr zugeordnete Kontrollsystem öffnet, da die unvollständige Anfrage die ZKV-Kennung nicht enthält.

Diese Merkmale können vorteilhaft sein, da sie verhindern, dass ein Fahrer, der sich noch nicht in räumlicher Nähe und damit außerhalb der Sichtweite der ZKV befindet, die ZKV öffnen kann. Insbesondere wenn der Steuerbefehl die automatische Bewegung größerer Objekte, z.B. das Aufschwingen oder Einfahren eines Tors oder Gatters, bewirkt, besteht Verletzungsgefahr für Personen, die ggf. unmittelbar vor dem Tor stehen oder z.B. einen Arm oder ein Bein durch relativ zueinander bewegliche Gitterstäbe eines Tors gesteckt haben. Folgende Implementierungsvarianten werden durch das oben beschriebene Konzept der Anzeige oder Aktivierung des auswählbaren GUI-Elements umfasst:
Gemäß einer Ausführungsform wird das besagte auswählbare GUI-Element, dessen Auswahl das Senden der ZKV-Öffnungs-Anfrage an den Stellplatz-Buchungsdienst bewirkt, erst nach Empfang des Nahfeldsignals (also fahrerpositionsabhängig) erzeugt und auf der GUI angezeigt. Der Nutzer kann das GUI-Element von einer "entfernten" Position aus nicht auswählen, da das GUI-Element dort gar nicht angezeigt wird.

Gemäß einer anderen Ausführungsform wird das besagte auswählbare GUI-Element, dessen Auswahl das Senden des ZKV-Öffnungs-Anfrage an den Buchungsdienst bewirkt, zwar schon vor dem Empfang des Nahfeldsignals erzeugt und auf der GUI angezeigt, es ist aber "ausgegraut" oder anderweitig als inaktiv gekennzeichnet. Eine Auswahl des inaktiven GUI-Elements induziert keinerlei Aktion seitens der Buchungs-App. Der Nutzer kann das GUI-Element von einer "entfernten" Position aus nicht auswählen, da das GUI-Element dort zwar angezeigt wird, aber in einer inaktiven Form. Wenn die Buchungs-App das Nahfeldsignal empfängt, wird das GUI-Element aktiviert, also z.B. in seinen Standardfarben angezeigt. Eine Auswahl eines solchermaßen aktivierten GUI-Elements veranlasst das Senden einer ZKV-Öffnungs-Anfrage an den Buchungsdienst.

Gemäß einer weiteren Ausführungsform wird das besagte auswählbare GUI-Element, dessen Auswahl das Senden des ZKV-Öffnungs-Anfrage an den Buchungsdienst bewirkt, schon vor dem Empfang des Nahfeldsignals erzeugt und auf der GUI in Standardfarben angezeigt, und die Auswahl dieses GUI-Elements bewirkt auch eine Aktion, z.B. das Senden einer unvollständigen ZKV-Öffnungs-Anfrage an den Buchungsdienst. Die solcherart ausgelöste Aktion veranlasst den Buchungsdienst jedoch nicht dazu, einen entsprechenden Befehl zur Zufahrtsgewährung an das Kontrollsystem der ZKV zu senden. Erst wenn die Buchungs-App das Nahfeldsignal empfängt, erzeugt es eine vollständige ZKV-Öffnungs-Anfrage einschließlich der ZKV-ID, die nach erfolgreicher Buchungsprüfung durch den Buchungsdienst dazu führt, dass der Buchungsdienst einen entsprechenden Befehl an die Kontrolleinheit der ZKV sendet.

In allen drei Ausführungsformen ist das GUI-Element erst dann "aktiv" in dem Sinne, dass seine Auswahl die Öffnung der ZKV bewirkt, wenn der Fahrer sich in hinreichender räumlicher Nähe zum Kontrollsystem befindet um das Nahfeldsignal zu empfangen.

Unter einem "**Stellplatz**" wird im Folgenden eine Fläche innerhalb eines Parkplatzes verstanden, die zum Parken eines Fahrzeugs eines bestimmten Typs dient. Typischerweise ist eine Stellplatzfläche nur unwesentlich größer als die typische Größe des Fahrzeugs dieses Typs. Bei einem Stellplatz kann es sich zum Beispiel um einen Kfz-Stellplatz oder einen Lkw-Stellplatz handeln. Typischerweise sind einzelne Stellplätze eines Parkplatzes nicht durch bauliche Vorrichtungen wie zum Beispiel Wände oder Türen voneinander getrennt. In manchen Fällen ist es jedoch möglich, dass einzelne Stellplätze (Lkw-Boxen) durch Wände oder planen von benachbarten Stellplätzen abgegrenzt sind. Typischerweise ist die Zufahrt zu einem Stellplatz nicht zufahrtsbeschränkt. In manchen Ausführungsformen ist es jedoch auch möglich, dass zumindest einige der Stellplätze gegebenenfalls auch weitere Zufahrtsschranken aufweisen, einschließlich einer Stellplatz-individuellen ZKV mit zugewiesenen Kontrollsystem.

Unter einem **"Parkplatz"** wird im Folgenden ein Areal verstanden, auf welchem sich ein oder mehrere Stellplätze befinden. Ein Parkplatz hat eine oder mehrere Zufahrten. Vorzugsweise befindet sich an jeder Zufahrt eine ZKV sowie ein Kontrollsystem, welches dieser ZKV zugewiesen ist. Gemäß bevorzugten Ausführungsformen ist der Parkplatz vor unberechtigter Zufahrt durch mechanische Maßnahmen geschützt, zum Beispiel durch Zäune, Mauern, Türen und/oder Tore. In manchen Fällen ist der Schutz eines Parkplatzes darauf beschränkt, dass eine Zufahrt auf befestigten Wegen zwingend an einer ZKV mit entsprechendem Kontrollsystem vorbeiführt. Wenn der Parkplatz beispielsweise sehr viel Publikumsverkehr aufweist, kann davon ausgegangen werden, dass eine Zufahrt auf den Parkplatz über unbefestigte Wege zu auffällig wäre und daher unterlassen wird.

Unter einem **"Server"** wird hier ein Computersystem verstanden, der einen Dienst über ein Netzwerk an andere datenverarbeitende Geräte bereitstellt. Bei dem Server kann es sich um einen einzelnen Computer handeln oder über ein Rechnernetzwerk, z.B. ein Cloudsystem.

Unter einem **"Zugangskontrollvorrichtung"** (ZKV) wird hier eine physische Vorrichtung verstanden, die in mindestens zwei Zuständen vorliegen kann, wobei bei Vorliegen eines offenen Zustands einer Person Zufahrt oder Zutritt zu einem von der ZKV geschützten Bereich gewährt wird und bei Vorliegen eines geschlossenen Zustands der Person die Zufahrt oder der Zutritt verwehrt ist. Bei der ZKV kann es sich insbesondere um eine Tür, ein Tor, einen Poller, ein Gatter oder um einen Verriegelungs-mechanismus innerhalb der vorgenannten Elemente handeln. Vorzugsweise ist die ZKV mit einer Energiequelle, z.B. einer Batterie oder einer anderen Stromquelle verbunden, sodass die ZKV nach erhalt eines entsprechenden Steuerbefehls selbsttätig unter Nutzung der Energie der Energiequelle von dem offenen in den geschlossenen Zustand oder umgekehrt überführt werden kann. In manchen Ausführungsformen bewegt sich die ZKV oder ein wesentlicher Teil der ZKV im Zuge des Zustandsübergangs mechanisch. Beispielsweise kann sich ein Schiebetor beim Öffnen oder Schließen in horizontaler Richtung bewegen, ein Rolltor in horizontaler oder vertikaler Richtung, oder eine Tür in Form einer Drehung des Türblatts um die Türangel. In diesen Ausführungsformen ist es besonders vorteilhaft, dass das Verfahren implizit sicherstellt, dass der Fahrer sich in räumlicher Nähe zum ZKV befinden muss, um die ZKV zu öffnen. In anderen Ausführungsformen bewirkt eine Öffnung der ZKV nur, dass ein Verschlussmechanismus geöffnet wird, sodass der Fahrer dann eine Tür oder ein Tor eigenhändig öffnen kann.

Unter einem **"Kontrollsystem in räumlicher Nähe zu einer ZKV"** wird im hier verstanden, dass das Kontrollsystem sich innerhalb eines Abstands von weniger als 80 m, vorzugsweise weniger als 30 m, und insbesondere weniger als 5 m von der ZKV befindet, der das Kontrollsystem zugewiesen ist. Insbesondere dann, wenn das Kontrollsystem die ihm zugewiesene ZKV per Funkbefehl steuert bedeutet die räumliche Nähe eine Entfernung zwischen ZKV und Kontrollsystem von maximal der Reichweite des Funksignals.

Unter einem **"Nahfeldsignal"** wird ein Signal, insbesondere ein elektromagnetisches Signal, z.B. ein Funksignal, verstanden, welches eine Reichweite von weniger als 100 m, vorzugsweise von weniger als 50 m, z.B. weniger als 10m hat. Beispielsweise kann es sich um ein elektromagnetisches Signal handeln, das durch Hindernisse, die für den jeweiligen Wellenlängenbereich opak sind, auf einen definierten Bereich begrenzt ist oder dessen Stärke nach z.B. 100 m bzw. 50 m bzw. 10 m so schwach ist, dass es von einem Sensor des mobilen Telekommunikationsgeräts des Fahrers nicht mehr erfasst werden kann. Bei dem Nahfeldsignal kann es sich z.B. um ein NFC-Signal im engeren Sinne handeln, oder um ein Bluetooth Signal oder andere Signalformen geeigneter effektiver Reichweite.

Der Begriff "Nahfeld" ist hier nicht beschränkt auf das "reaktive Nahfeld" als den Bereich in unmittelbarer Nähe zu einer Antenne. Das Nahfeld im Sinne von Ausführungsformen der Erfindung kann auch das Übergangsfeld ("Fresnel-Region") oder Fernfeld ("Fraunhofer-Region") umfassen, sofern durch opake Signalhindernisse und/oder die Signalstärke gewährleistet ist, dass die Reichweite des Signals geringer ist als 100 m, vorzugsweise geringer als 50 m.

Unter einem **"Kontrollsystem"** wird hier ein elektronisches Gerät oder eine elektronische Gerätekomponente verstanden, welche dazu ausgebildet ist, Steuerbefehle an eine dem Kontrollsystem zugewiesene ZKV zu senden um die ZKV mit diesen Steuerbefehlen zu steuern, also zu "kontrollieren". Das Kontrollsystem kann diese Befehle kabelgebunden oder drahtlos an die jeweilige ZKV übermitteln. Vorzugsweise erfolgt die Ermittlung drahtlos per Funksignal.

Unter einer **"App"** wird hier jegliche Anwendungssoftware (auch Anwendungsprogramm, kurz Anwendung oder Applikation) verstanden, die auf einem mobilen Telekommunikationsgerät wie z.B. einem Smartphone, einem Notebook oder einem Tablet-Computer ausgeführt wird und die typischerweise eine gewünschte nicht systemtechnische Funktionalität bereitstellt.

Unter einer **"Fahrer-ID"** wird hier ein Datenwert oder eine Kombination mehrerer Datenwerte verstanden, welcher einem Fahrer eindeutig zugewiesen ist und es erlaubt diesen einen Fahrer innerhalb einer Vielzahl anderer Fahrer zu identifizieren. Beispielsweise kann die Fahrer-ID ein alphanumerischer Wert sein, der jedem beim Stellplatz-Buchungsdienst registrierten Fahrer eindeutig zugewiesen wird. Es kann sich bei der Fahrer-ID z.B. um einen Zufallswert handeln oder um eine Kombination aus Vorname und Nachname und ggf. weiteren fahrerbezogenen Attributen wie z.B. Geburtsort oder Geburtsdatum.

Unter einer **"ZKV-Kennung"** wird hier ein Datenwert oder eine Kombination mehrerer Datenwerte verstanden, welcher einer ZKV eindeutig zugewiesen ist und es erlaubt, diese eine ZKV innerhalb einer Vielzahl anderer ZKVs zu identifizieren. Beispielsweise kann die ZKV-Kennung ein alphanumerischer Wert sein, der jeder ZKV und/oder jedem Kontrollsystem, das dieser ZKV zugewiesen ist, im Zuge der Registrierung dieser ZKV oder im Zuge der Registrierung dieses Kontrollsystems beim Stellplatz-Buchungsdienst eindeutig zugewiesen wird. Es kann sich bei der ZKV-Kennung um einen Zufallswert handeln oder um eine von einer Hardwarekomponente der ZKV oder einer Hardwarekomponente des ihr zugewiesenen Kontrollsystems abgeleiteten Wert handeln.

Der Begriff **"NFC"** (engl. Near Field Communication) ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern. Die maximale Datenübertragungsrate dieses Standards beträgt derzeit 424 kBit/s. Die Übertragung erfolgt entweder verbindungslos (mit passiven HF-RFID-Tags nach ISO/IEC 14443 oder ISO/IEC 15693) oder verbindungsbehaftet (zwischen gleichwertigen aktiven Transmittern). Die mindestens zu berücksichtigenden Sicherheitsfunktionen des NFC Standards werden auch in die Hardware mancher mobiler Telekommunikationsgeräte integriert. Erfolgte Qualifizierungen ausgeführter Geräte nach ISO/IEC 15408 sind bisher nicht publiziert. Die entsprechenden und teilweise noch in der Entwicklung befindlichen internationalen Normen lauten z.B. ISO/IEC 13157, -16353, -22536, -28361.

Der Begriff **"NFC Signal"** bezeichnet ein Signal, das gemäß des NFC Standards spezifiziert und übertragen wird. Nicht jedes Nahfeldsignal im Sinne der Erfindung ist also notwendigerweise auch ein NFC Signal.

Unter einem **"iBeacon-Signal"** wird hier ein Signal verstanden, das von einem Kontrollsystem gemäß des iBeacon Standards ausgesendet wird. Bei dem iBeacon Standard handelt es sich um einen 2013 von Apple eingeführten, proprietären Standard zur Lokalisierung in geschlossenen Räumen. Der Standard basiert auf Bluetooth Low Energy (BLE) und wird von Apples Betriebssystem iOS ab iOS 7 bzw. vom Betriebssystem Android ab Android Version 4.3 unterstützt. Der Standard kann somit ab dem iPhone 4s, iPad (dritte Generation) und iPod Touch (fünfte Generation) sowie aktuellen Android-Geräten genutzt werden. Derartige mobile Telekommunikationsgeräte können also ein als iBeacon-Signal, das kontinuierlich oder wiederholt in kurzen zeitlichen Abständen von einem Kontrollsystem emittiert wird, vom mobilen Telekommunikationsgerät des Fahrers, das den iBeacon Standard unterstützt, empfangen werden. Das empfangene iBeacon Signal wird von der Stellplatz-Buchungs-App analysiert und die darin spezifizierte ZKV-Kennung ausgelesen, um diese zusammen mit einer Fahrer-ID, die z.B. in der lokalen Instanz der Stellplatz-Buchungs-App gespeichert sein kann, über das Mobilfunknetz an den Stellplatz-Buchungs-Dienst zu übertragen.

### Kurze Beschreibung der Zeichnung

Nachfolgend werden Ausführungsformen der Erfindung mit Bezug auf die Zeichnung beschrieben. In der Zeichnung zeigt
- Fig. 1: ein Blockdiagramm eines Systems zur Zufahrtkontrolle gemäß einer Ausführungsform;
- Fig. 2: ein Blockdiagramm mit weiteren Komponenten des Systems zur Zufahrtskontrolle mit Fokus auf einer ersten ZKV;
- Fig. 3: ein Blockdiagramm mit weiteren Komponenten des Systems zur Zufahrtskontrolle mit Fokus auf einer weiteren ZKV;
- Fig. 4: ein Display eines mobilen Telekommunikationsgeräts;

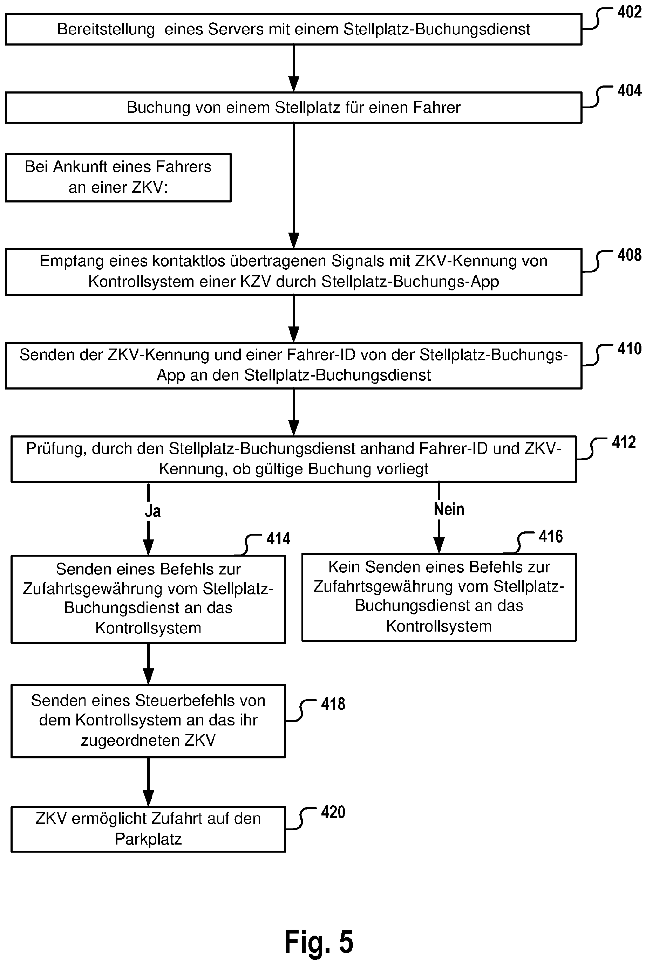

- Fig. 5: ein exemplarisches Flussdiagramm einer Ausgestaltung des erfindungsgemäßen Verfahrens;
- Fig. 6: ein Foto eines Prototyps von Komponenten eines Kontrollsystems;
- Fig. 7: ein Foto einer mittels Funkbefehlen steuerbaren Türklinke.

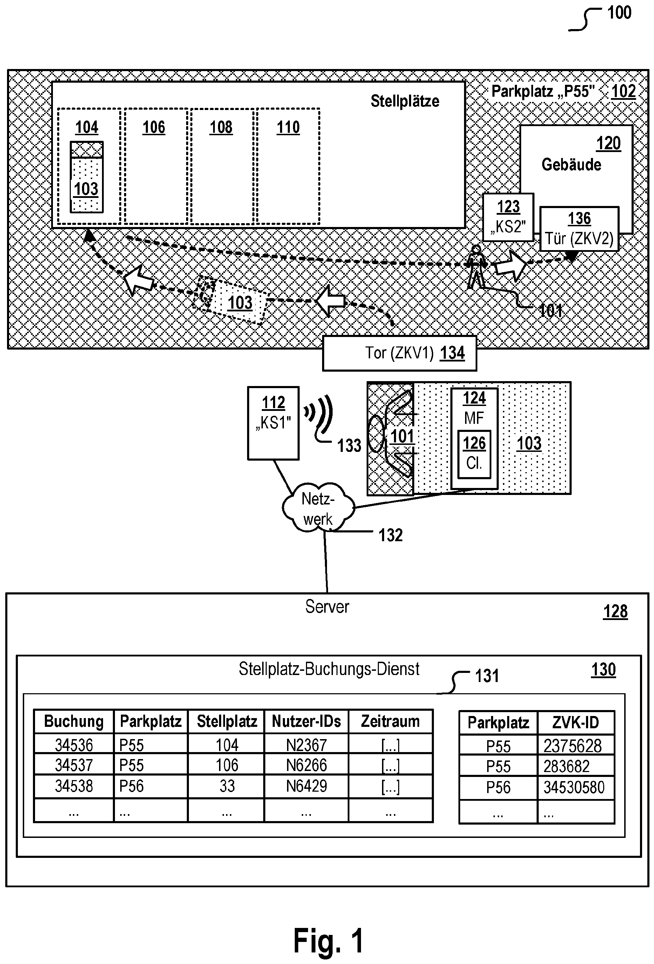

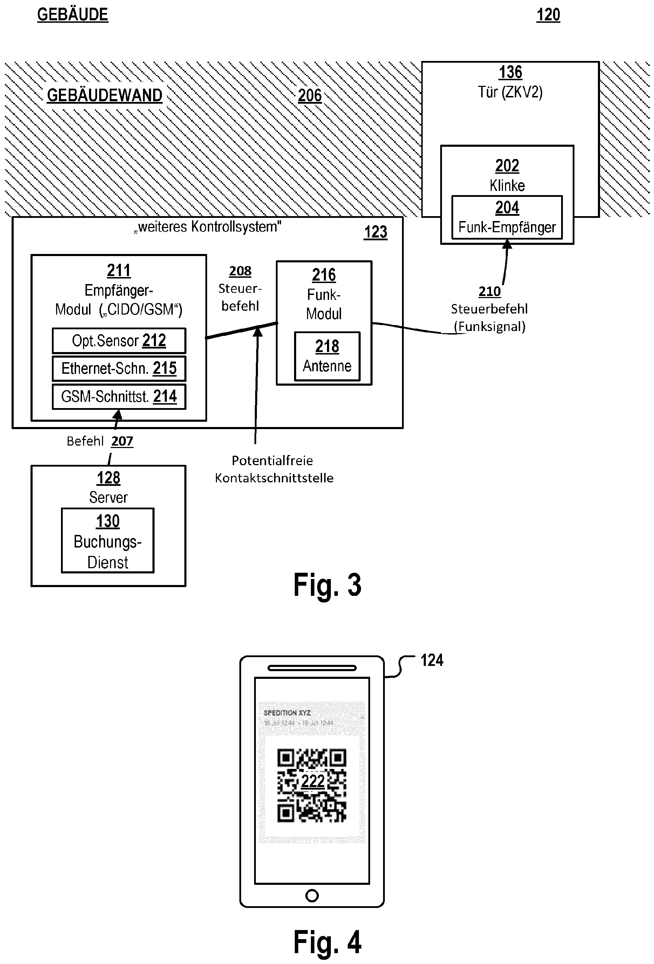

**Figur 1** illustriert ein Blockdiagramm eines Systems 100 zur Zufahrtkontrolle gemäß einer Ausführungsform. **Figur 4** zeigt ein exemplarisches Flussdiagramm einer Ausgestaltung des erfindungsgemäßen Verfahrens. Im Folgenden sollen die in Figur 4 illustrierten Verfahrensschritte anhand der in Figur 1 dargestellten Systemkomponenten beschrieben werden. Das Verfahren gemäß Figur 4 kann jedoch auch durch andere Ausführungsformen des Systems ausgeführt werden.

In einem ersten Schritt 402 wird ein Server mit einem Stellplatz-Buchungs-Dienst bereitgestellt. Beispielsweise können die Betreiber oder Eigentümer von Parkplätzen diese Parkplätze und die auf ihnen vorhandenen Stellplätze bei einem zentralen Stellplatz-Buchungsdienst 130 registrieren. Im Zuge der Registrierung wird zumindest jedem Parkplatz 102 und gemäß mancher Ausführungsformen auch jedem Stellplatz 104-110 eine eindeutige Kennung zugewiesen und in einem Register 131 gespeichert. Die Kennungen werden auf einen elektronischen Speichermedium gespeichert, zum Beispiel in einer relationalen Datenbank, die von dem Dienst 130 verwaltet wird.

In Ausführungsformen, in welchen auch einzelne Stellplätze beim Buchungsdienst registriert werden, werden die Parkplatzkennungen und Stellplatzkennungen verknüpft gespeichert, sodass erkennbar ist, welcher Stellplatz zu welchem Parkplatz gehört.

In anderen Ausführungsformen sind bei dem Buchungsdienst nur Parkplätze mit einer bestimmten Anzahl buchbarer Stellplätze registriert, ohne dass den Stellplätzen dieses Parkplätzen einzelne IDs zugewiesen sind und/oder ohne dass den Fahrern im Zuge der Buchung ein bestimmter Stellplatz zugewiesen wird. In diesem Fall erfolgt eine Buchung für einen nicht festgelegten Stellplatz des Parkplatzes und es wird im Zuge der Buchung lediglich überprüft, ob noch mindestens ein freier Stellplatz frei ist. Die Buchung erfolgt in diesem Fall für einen Parkplatz und einen beliebigen darauf befindlichen Stellplatz, sie beinhaltet keine eineindeutige Zuweisung eines bestimmten Stellplatzes zu dem Fahrer.

Außerdem können hier Zusatzdaten gespeichert sein wie zum Beispiel Zeiten, an welchen Einstellplatz noch verfügbar ist, der Typ des Fahrzeugs, der auf einem Stellplatz parken kann, ob sanitäre Einrichtungen oder besondere Sicherheitsmaßnahmen auf dem Parkplatz vorhanden sind, etc. Beispielsweise können Speditionen oder Firmen, die große Parkplätze für Kunden und Lieferfahrzeuge besitzen, die nachts nicht genutzt werden, diese Parkplätze bzw. Stellplätze bei dem Dienst registrieren lassen. Beispielsweise kann dies erfolgen, um mit den Parkplätzen auch während der nicht genutzten Zeiten, insbesondere nachts, Einnahmen zu erzielen.

Nach einer Ausführungsform können sich Fahrer bei dem Dienst registrieren. Fahrer können z.B. eigenständig zunächst ein Fahrer-Benutzer-Konto für eine mobile, auf dem Smartphone des Fahrers instanziierte Stellplatz-Buchungs-App 126, die mit dem Buchungs-Dienst 130 interoperabel ist, anlegen. Dieses Konto hat unmittelbar nach der Erzeugung innerhalb der lokalen App noch keinen Zugang zum Buchungsdienst. Eine Einladung zur Freischaltung für den Buchungsdienst erfolgt über einen Disponenten des Unternehmens für das dieser Fahrer fährt. Ersatzweise kann auch der Parkplatzbetreiber dem Fahrer im Namen eines Disponenten eine Einladung zur Freischaltung zuschicken, z.B. über ein Webinterface des Buchungsdienstes 130. Eine Einladung enthält jeweils einen Aktivierungscode, den der Fahrer dann zur Freischaltung in der App eigenständig an der entsprechenden Stelle (z.B. über eine weitere Webseite des Stellplatz-Buchungsdienstes) eingeben muss.

Gemäß anderer Ausführungsformen kann der Fahrer sich über ein Webinterface des Dienstes 130 oder über die Stellplatz-Buchungs-App 126 durchgeführt werden. Im Zuge der Registrierung wird jedem Fahrer eine eindeutige Fahrer-ID zugewiesen, die als Bestandteil eines Nutzerprofils des jeweiligen Fahrers ebenfalls von dem Dienst gespeichert wird.

Die registrierten Parkplätze verfügen über zumindest eine ZKV, zum Beispiel ein Tor an einer Zufahrt des Parkplatzes. Oftmals verfügt ein Parkplatz sogar über mehrere ZKVs, zum Beispiel ein Haupttor an einer Seite des Parkplatzes und ein oder mehrere Nebentore an weiteren Seiten des Parkplatzes. Außerdem können weitere ZKVs den Zutritt zu Gebäuden innerhalb des Parkplatzes regeln. Um eine volle Integration der Parkplätze bzw. Stellplätze in den Buchungsdienst zu erzielen, kann beispielsweise in räumlicher Nähe von einer oder mehreren der ZKVs des Parkplatzes jeweils ein Kontrollsystem installiert werden, das dazu eingerichtet ist, die jeweilige ZKV zu steuern und dadurch deren Zustand (offen oder geschlossen) zu kontrollieren. Die "Kontrolle" impliziert hier, dass das Kontrollsystem den Zustand steuern, also festlegen kann, impliziert jedoch nicht, dass das Kontrollsystem den aktuellen Zustand auch erfassen (sensieren) kann. Je nach der vor Ort verwendeten ZKV bzw. je nach Art des verwendeten Kontrollsystems kann die Kontrolle eine Erfassung und Berücksichtigung des aktuellen Zustands der ZKV umfassen, dies muss jedoch nicht der Fall sein. Jeder ZKV ist eine eindeutige Kennung (ZKV-ID, ZKV-Kennung) zugewiesen. Die ZKV-Kennung kann beispielsweise in dem Kontrollsystem gespeichert sein, dass die jeweilige ZKV kontrolliert. Außerdem ist die ZKV-Kennung in der von dem Server verwalteten Datenbank hinterlegt und beispielsweise verknüpft mit einer Parkplatz-ID des Parkplatzes, in dem sich die ZKV befindet, gespeichert. Zumindest eines der Kontrollsysteme 112, die in den registrierten Parkplätzen jeweils installiert werden, sind dazu konfiguriert, permanent oder wiederholt (zum Beispiel einmal pro Sekunde) ein Nahfeldsignal 133 auszusenden, welches eine Kennung derjenigen ZKV 134 beinhaltet, die von diesen Kontrollsystem 112 kontrolliert wird und in dessen räumlicher Nähe sich das Kontrollsystem befindet.

Im nächsten Schritt 404 wird eine Buchung eines der Stellplätze auf einen der registrierten Parkplätze für einen der registrierten Fahrer vorgenommen. In dem in Figur 1 gezeigten Beispiel wird eine Buchung für den Stellplatz 104 auf Parkplatz 102 für den Fahrer 101 durchgeführt. Beispielsweise kann die Buchung mittels der Stellplatz-Buchungs-App 126 durch den Fahrer 101 selbst erfolgen, oder eine andere Person oder der Fahrer 101 nutzt hierfür eine optional vorhandene Buchung-Webseite, die von dem Buchungsdienst über das Internet bereitgestellt wird. Die Buchung bewirkt, dass ein entsprechender Datensatz in der Datenbank des Buchungsdienstes 130 gespeichert wird. Aus diesem Buchungsdatensatz geht hervor, welcher registrierte Fahrer in welchem Zeitraum einen Stellplatz auf einem der registrierten Parkplätze gebucht hat. Wie oben dargestellt kann die Buchung sich eindeutig auf einen bestimmten Stellplatz beziehen und die Buchung bewirken, dass dieser Stellplatz für den Buchungszeitraum nicht mehr durch andere Fahrer buchbar ist. In anderen Implementierungsvarianten spezifiziert die Buchung lediglich den Fahrer, den Zeitraum und den Parkplatz. Eine Buchung eines einzelnen Stellplatzes erfolgt nicht. Vielmehr sucht sich der Fahrer vor Ort einen freien Stellplatz aus und der Buchungsdienst prüft im Zuge der Buchung lediglich, ob noch ein freier Stellplatz für den Buchungszeitraum verfügbar ist.

Wenn der Fahrer 101 an der ZKV 134 des Parkplatzes 102, auf welchem sich der gebuchte Stellplatz 104 befindet, ankommt, befindet er sich automatisch innerhalb der Reichweite des Nahfeldsignals 133, das von dem Kontrollsystem 112 gesendet wird. Die Buchungs-App 126 auf dem Smartphone 124 des Fahrers 101 empfängt das Nahfeldsignal 133 in Schritt 408 und liest die darin spezifizierte ZKV-Kennung aus. Bei dem empfangenen Nahfeldsignal kann es sich zum Beispiel um ein Signal handeln, das im iBeacon Standard spezifiziert ist. Der Umstand, dass die Buchungs-App 126 das Signal 133 empfangen kann, ist ein Beweis dafür, dass sich der Fahrer 101 wirklich in räumlicher Nähe zu dem Tor 134 aufhält. Um das Signal 133 zu empfangen, muss der Fahrer weder das Fahrzeug verlassen noch das Fahrzeug an eine bestimmte Position bringen, solange er sich nur innerhalb der Reichweite des Senders des Nahfeldsignals 133 befindet. In der Buchung-App 126 ist eine Fahrer-ID des Fahrers 101 hinterlegt.

In Antwort auf den Empfang des Signals 133 erzeugt die Buchung-App 126 eine Nachricht, in welcher sowohl die ZKV-Kennung als auch die Fahrer-ID enthalten sind. Diese Nachricht wird in Schritt 410 automatisch über das Internet 132 an den Stellplatz-Buchungsdienst 130 übertragen. Vorzugsweise geschieht dies über eine Mobilfunkverbindung zwischen Server 128 und dem mobilen Telekommunikationsgerät 124. Der Datenaustausch zwischen App 126 und Dienst 130 kann über beliebige Schnittstellen erfolgen. Beispielsweise kann der Datenaustausch auf Basis der REST-API erfolgen oder auf Basis vergleichbarer oder ähnlicher Schnittstellen, insbesondere solcher, die sich standardisierter Verfahren wie HTTP/S, URI, JSON oder XML bedienen.

In Schritt 412 führt der Stellplatz-Buchungs-Dienst 130 eine Prüfung durch, ob für den durch die Fahrer-ID identifizierten Fahrer und für einen der Stellplätze des Parkplatzes, der über die ZKV-ID identifizierbar ist, eine gültige Buchung vorliegt. Beispielsweise kann die Prüfung auf Vorliegen einer gültigen Buchung auch eine Prüfung umfassen, ob der Buchungszeitraum die aktuelle Uhrzeit umfasst oder sich in zeitlicher Nähe zu dieser Uhrzeit befindet. Um dies festzustellen, durchsucht der Dienst die in der Datenbank hinterlegten Buchungsdatensätze. In Figur 1 sind die Buchungsdatensätze in der linken Tabelle dargestellt, die Zuweisung verschiedener ZKV-Kennungen zu Parkplatz-IDs in der rechten Tabelle.

Falls keine gültige Buchung vorliegt, wird kein Befehl zur Zufahrtsgewährung von dem Buchungsdienst an das Kontrollsystem 112 gesendet, wie dies in Box 116 angedeutet ist. Optional kann aber eine Hinweis-Nachricht an die Buchung-App 126, von welcher die Nachricht an den Dienst übermittelt wurde, gesendet und dort dem Fahrer über das Display des Telekommunikationsgeräts 124 angezeigt werden. Die Hinweisnachricht kann zum Beispiel weitere Informationen dazu enthalten, warum die Prüfung zu einem negativen Ergebnis kam. Beispielsweise könnte überhaupt keine Buchung vorliegen, der Buchungszeitraum könnte nicht mit der aktuellen Zeit übereinstimmen, etc.

Führt die Prüfung durch den Dienst zu dem Ergebnis, dass eine gültige Prüfung vorliegt, sendet der Dienst in Schritt 414 einen Befehl zur Zufahrtsgewährung an das Kontrollsystem 112, welches der ZKV 134, dessen ZKV-Kennung in der Nachricht an den Dienst enthalten war, zugewiesen ist.

In Antwort auf den Erhalt dieses Befehls sendet das Kontrollsystem 112 in Schritt 418 einen Steuerbefehl an das ihr zugeordnete ZKV 134. Beispielsweise kann der Steuerbefehl als Funksignal ausgebildet sein und die ZKV 134 kann über einen entsprechenden Funkempfänger verfügen, der das Funksignal richtig interpretiert und in eine Zustandsänderung der ZKV überführt.

In Antwort auf den Empfang des Steuerbefehls ermöglicht die ZKV 134 in Schritt 420 dem Fahrer 101 die Zufahrt zu den Parkplatz 102. Beispielsweise kann der Steuerbefehl des Kontrollsystems 112 bewirken, dass die als Tor ausgebildete ZKV 134 sich automatisch öffnet, sodass der Fahrer das Fahrzeug nicht verlassen muss. Der Fahrer fährt nun zu dem Stellplatz 104, der für ihn gebucht wurde. Beispielsweise können dem Fahrer im Zuge der Buchung die entsprechenden Buchungsdetails einschließlich einer Kennung des Stellplatzes 104 auf verschiedenem Wege mitgeteilt worden sein, zum Beispiel per E-Mail oder über die App 126.

Nach einer Ausführungsform bewirkt eine erfolgreiche Buchung für einen Fahrer, dass in der GUI der Stellplatz-Buchungs-App des Fahrers ein auswählbares Element, zum Beispiel ein Button mit der Aufschrift "Öffnen", in Verbindung mit der Buchung angezeigt wird. Der Button wird erst dann aktiviert, d. h. für den Fahrer wählbar, wenn das mobile Telekommunikationsgerät bzw. die darauf instanziierte Stellplatz-Buchungs-App des Fahrers beim Erreichen der ZKV das Nahfeldsignal mit der ZKV-Kennung dieser ZKV empfängt. In dieser Ausführungsform löst der Empfang des Nahfeldsignals durch die App also nicht automatisch das Senden einer Nachricht mit der in dem Nahfeldsignal spezifizierten ZKV-Kennung und mit der Fahrer-ID von der App an den Server über das Mobilfunknetz aus. Vielmehr ist für das Senden dieser Nachricht erforderlich, dass der Fahrer das Senden der Nachricht an den Server, dass bei erfolgreicher Prüfung letztlich die Öffnung der ZKV 134 bewirken wird, explizit durch Auswahl des GUI Elements bestätigt.

Gemäß manchen Ausführungsformen prüft die Stellplatz-Buchungs-App 126 nach Empfang des Nahfeldsignals 133, ob die in dem Nahfeldsignal spezifizierte ZKV-Kennung identisch ist zu einer von ein oder mehreren ZKV-Kennungen, die als Bestandteil eines zu dieser Buchung gehörenden Buchungsdatensatzes in der App gespeichert sind. Das auswählbare GUI Element wird nur bei Übereinstimmung der ZKV-Kennung des Nahfeldsignals mit einer ZKV-Kennung in dem Buchungsdatensatz aktiviert. Somit kann sichergestellt werden, dass ein Fahrer, der sich an einer ZKV eines anderen Parkplatzes als dem Parkplatz befindet, dessen Stellplatz er gebucht hat, nicht erfolgreich eine ZKV eines entfernt liegenden Parkplatzes öffnen kann.

Das hier beschriebene Verfahren erfordert allerdings das Vorhandensein einer Mobilfunkverbindung, damit die Buchung-App 126 die ZKV-Kennung und Fahrer-ID an den Dienst über das Mobilfunknetz übermitteln kann. Vorzugsweise beinhaltet das Kontrollsystem 112 zusätzlich einen optischen Sensor zur Erfassung eines grafischen Codes, in dem die Buchungsdetails spezifiziert sind und der dem Fahrer als Ausdruck oder digitales Bild auf der App vorliegt. Dies ermöglicht es dem Fahrer, sich nötigenfalls auch ohne Mobilfunknetz Zufahrt zu verschaffen. Dieses alternative Verfahren ist im Detail mit Referenz auf die in Figur zwei dargestellten Ausführungsform beschrieben und kann auch gemäß Ausführungsformen der Erfindung in dem in Figur 1 dargestellten System durchgeführt werden.

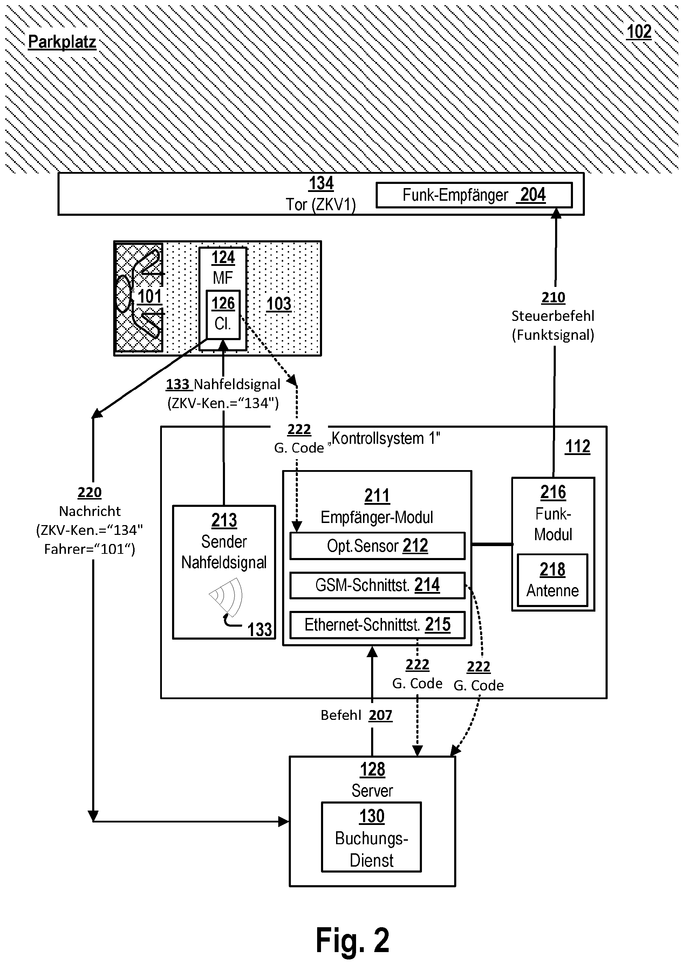

Häufig finden sich auf größeren Parkplätzen, insbesondere Lkw-Parkplätzen, auch weitere Räumlichkeiten 120, zum Beispiel Sanitäranlagen. Oftmals sind auch diese vor unberechtigten Zutritt geschützt. Beispielsweise ist der Zutritt zu dem Gebäude 120 durch eine weitere ZKV 136, hier zum Beispiel eine Tür, geschützt. Die weitere ZKV 136 wird durch ein weiteres Kontrollsystem 123, das der weiteren ZKV 136 zugewiesen ist, kontrolliert und gesteuert. Ein Verfahren, wie sich der Fahrer 101 gemäß Ausführungsformen der Erfindung Zutritt zu dem Gebäude 120 verschaffen kann, ist mit Referenz auf die Figuren 2 und 3 näher beschrieben.

**Figur 2** zeigt ein Blockdiagramm mit weiteren Komponenten des Systems zur Zufahrtskontrolle mit Fokus auf einer ersten ZKV 134. Bei der ersten ZKV kann es sich zum Beispiel um eine ZKV handeln, die in baulicher und/oder funktionaler Hinsicht der ZKV aus Figur 1 entspricht.

Bei dem in Figur 2 gezeigten Beispiel kann es sich bei dem Nahfeldsignal zum Beispiel um ein Funksignal auf Basis des iBeacon Standards handeln. Der iBeacon Standard basiert auf einem Sender-Empfänger-Prinzip. Dazu werden im Raum kleine Sender (Beacons) als Signalgeber platziert, die in festen Zeitintervallen Signale senden. Beispielsweise wird in ein oder mehrere Kontrollsysteme 112, 123 eines Parkplatzes je ein Sender (Beacon) integriert. Kommt ein Empfänger - z. B. ein Smartphone des Fahrers 101 mit einer installierten Stellplatz-Buchungs-App 126, die für den Empfang von iBeacon Signalen konfiguriert ist - in die Reichweite eines Senders 134, kann die Universally Unique Identifier (UUID) des Senders, der hier als ZKV-Kennung der von dem Kontrollsystem kontrollierten ZKV zugewiesen ist, identifiziert und seine Signalstärke gemessen werden.

IBeacons können selber keine Nutzerdaten sammeln oder speichern. Sie senden lediglich Informationen zur eigenen Identität in Form von einer (dreiteiligen) UUID sowie einem Major- und einem Minor-Wert. Der Vorteil dieser Technologie ist neben der Datensparsamkeit (kein Tracking der Fahrer durch die Kontrollsysteme) unter anderem der sehr geringe Stromverbrauch, sodass diese Technologie auch bei batteriebetriebenen Kontrollsystemen verwendet werden kann. Aktuelle iBeacon-Module erreichen eine Reichweite von bis zu 30 Metern, sodass das Nahfeldsignal 133 auf die Reichweite dieser iBeacon Sender beschränkt ist. Anstelle des iBeacon Standards können auch alternative Standards wie z.B. Eddystone, ein von Google im Jahr 2015 veröffentlichter Standard oder die Alt Beacons des Herstellers Radius Networks verwendet werden.

Die UUID, der Major- und der Minor-Wert der iBeacons der bei dem Buchungsdienst registrierten Kontrollsysteme können z.B. so konfiguriert werden, dass nur die UUID oder die UUID zusammen mit dem Major-Wert für alle registrierten Kontrollsysteme identisch sind. Nur der Minor-Wert oder der Major zusammen mit dem Minor-Wert sind von iBeacon zu iBeacon unterschiedlich. Beispielsweise kann nur im Minor-Wert oder in einer Kombination von Minor-Wert und Major-Wert die ZKV-Kennung spezifiziert sein. Minor- und Major-Wert können z.B. Zahlen im Bereich von 0 bis 65535 sein.

Dem Tor 134 an der Zufahrt zu dem Parkplatz 102 ist das Kontrollsystem 112 zugeordnet. Das Kontrollsystem 112 beinhaltet ein Sendemodul 213, welches das Nahfeldsignal 133 emittiert. Der Sender 213 kann zum Beispiel als iBeacon ausgebildet sein und das Signal 133 kann die ZKV-Kennung des Tores 134 beinhalten. Sobald der Fahrer 101 mit seinem Fahrzeug 103 sich dem Tor 134 so weit genähert hat, dass sein Smartphone 124 das iBeaconsignal empfangen und die darin spezifizierte ZKV-Kennung auslesen kann, zeigt die GUI der Stellplatz-Buchungs-App 126 dem Fahrer 101 einen "Öffnen" Button an. Der Fahrer 101 erhält hierdurch die Möglichkeit, das Tor 134 durch Auswahl dieses Buttons automatisch zu öffnen, ohne das Fahrzeug zu verlassen. Die Auswahl des Buttons bewirkt, dass die App 126 eine Nachricht 220 mit der ZKV-Kennung des Tores 134 und mit einer Fahrer-ID des Fahrers 101 an den Server 128 mit dem Stellplatz-Buchungsdienst sendet. Die Nachricht 220 wird über das Mobilfunknetz an den Server übertragen.

Der Dienst führt wie bereits beschrieben eine Prüfung durch, ob für einen der Stellplätze des Parkplatzes 102 und für den Fahrer 101 aktuell eine gültige Buchung vorliegt. Ist dies der Fall, sendet der Dienst einen Befehl 207 zur Ermöglichung der Zufahrt an ein Empfängermodul 211 des Kontrollsystems 112. Die Übertragung des Befehls 207 erfolgt über das Internet. Die Übertragung des Befehls 207 erfolgt vorzugsweise über eine Netzwerkverbindung mit gesicherter Verfügbarkeit. Je nach Ausführungsform kann diese Netzwerkverbindung kabelgebunden sein (wie zum Beispiel über die Schnittstelle 215 angedeutet), oder auf einem verlässlichen Mobilfunknetz beruhen (wie dies zum Beispiel durch die GSM Schnittstelle 214 angedeutet ist). Dies hat den Vorteil, dass der Befehl 207 verlässlich übertragen werden kann auch dann, wenn das Netz des Mobilfunkanbieters des Fahrers aktuell nicht verfügbar ist. In Deutschland und anderen Ländern ist die Qualität und Verfügbarkeit der Mobilfunknetze verschiedener Anbieter in vielen Regionen recht unterschiedlich. Oft kann nur ein Teil der am Markt agierenden Mobilfunkanbieter in einer bestimmten geographischen Region ein stabiles und hinreichend starkes Netz garantieren.

Nach Erhalt des Befehles 207 veranlasst das Empfängermodul 211 gemäß einer Ausführungsform, dass ein Funkmodul 216, das ebenfalls Bestandteil des Kontrollsystems 112 ist, einen Steuerbefehl 210 in Form eines Funksignals an den Funkempfänger 204 des Tores 134 sendet. Der Empfang des Befehles 210 durch den Funkempfänger bewirkt, dass dieser das Tor automatisch öffnet und hierdurch die Zufahrt zu dem Parkplatz 102 freigibt. Gemäß einer anderen Ausführungsform sendet das Empfängermodul 211 nach Erhalt des Befehles 207 den Steuerbefehl 210 kabelgebunden an die ZKV.

Gemäß manchen Ausführungsformen beinhaltet ein Parkplatz ein oder mehrere erste Kontrollsysteme, die je mittels eines ersten ZKVs die die Zufahrt zu dem Parkplatz kontrollieren, und ein oder mehrere zweite Kontrollsysteme, die je mittels eines zweiten ZKVs den Zutritt zu einer Räumlichkeit innerhalb des Parkplatzes kontrollieren, wobei die ersten Kontrollsysteme den Steuerbefehl 210 an ihre jeweilige erste ZKV kabelgebunden senden und wobei die zweiten Kontrollsysteme den Steuerbefehl 210 an ihre jeweilige zweite ZKV in Form eines Funksignals senden. Es sind aber auch andere Ausführungsformen möglich, z.B. solche, in welchen die ersten Kontrollsysteme den Steuerbefehl 210 an ihre jeweilige erste ZKV per Funksignal senden und wobei die zweiten Kontrollsysteme den Steuerbefehl 210 an ihre jeweilige zweite ZKV über eine kabelgebundene Netzwerkverbindung senden. Auch Mischformen sind möglich. Beispielsweise können manche Paare aus ersten Kontrollsystemen und ersten ZKVs eines bestimmten Parkplatzes Daten kabelgebunden austauschen, andere per Funk. Zusätzlich oder alternativ dazu können manche Paare aus zweiten Kontrollsystemen und zweiten ZKVs eines bestimmten Parkplatzes Daten kabelgebunden austauschen, andere per Funk. Falls eine Tür zu einem Gebäude oder ein Tor zu einem Parkplatz bereits über einen "Summer" verfügt, also über eine elektrische, mit Fernbedienung im Türrahmen eingebaute Vorrichtung mit elektromagnetischer Schlossfallen-Entriegelung, die kabelgebunden ansteuerbar ist und die vor dem Öffnen der Tür einen Ton abgibt, kann z.B. ein kabelgebundener Datenaustausch gewählt werden.

Die Abfolge der verschiedenen Signale, Nachrichten und Befehle 133, 220, 207, 210 wurde hier beschrieben unter der Annahme, dass in der Nähe des Parkplatzes 102 eine Mobilfunkverbindung verfügbar ist. Dies ist jedoch nicht in jedem Fall gegeben.

Um sicherzustellen, dass der Fahrer auch dann Zufahrt zu dem Parkplatz erhält, wenn kein Mobilfunknetz verfügbar ist, beinhaltet das Kontrollsystem 112 zusätzlich einen optischen Sensor 212, zum Beispiel eine Kamera. Falls kein Netz verfügbar ist, hält der Fahrer einen Ausdruck mit einem grafischen Code 222 in den optischen Erfassungsbereich der Kamera. Anstelle des Ausdruckes kann auch das Display des mobilen Telekommunikationsgerätes 124, auf dem der grafische Code angezeigt wird, in den Erfassungsbereich der Kamera eingeführt werden. Der von dem optischen Sensor erfasste Code 222 wird über die Schnittstelle 214 oder 215, also über eine Netzwerkverbindung mit gesicherter Verfügbarkeit, von dem Kontrollsystem 112 an den Server 128 gesendet. Der Code 222 beinhaltet ebenfalls die ZKV-Kennung und die Fahrer-ID oder einen Verweis auf diese Daten. Somit kann der Stellplatz-Buchungsdienst 130 die Prüfung auf Basis des grafischen Codes 222 genauso durchführen wie auf Basis der Nachricht 220. Der Datenübertragungskanal des Codes vom Display des Smartphones 124 über das Empfängermodul 211 des Kontrollsystems 112 bis hin zum Server 128 ist mit gestrichelten Pfeilen dargestellt und stellt einen alternativen Datenübertragungskanal dar, der immer verfügbar ist, auch dann, wenn das Mobilfunknetz, das das Smartphone des Fahrers normalerweise zum Datenaustausch verwendet, nicht vorhanden ist. Die auf die Prüfung folgenden Schritte der Übertragung der Befehle 207, 210 läuft genauso ab wie bereits für den Fall der Verfügbarkeit eines Mobilfunknetzes beschrieben.

In jedem Fall muss der Fahrer nachweisen, dass es sich in der räumlichen Nähe des Tores befindet, um das Tor zu öffnen. Der Nachweis erfolgt entweder dadurch, dass er die ZKV-Kennung aus dem Nahfeldsignal 133 auslesen und in Form der Nachricht 220 übermitteln kann, oder dadurch, dass er den grafischen Code in den Erfassungsbereich des optischen Sensors 212 einbringt, sodass der Code oder die in ihm spezifizierten Daten von dem Kontrollsystem an den Server übermittelt werden können.

Kontrollsysteme die sowohl einen Sender 213 für das Nahfeldsignal 133 als auch einen optischen Scanner 212 beinhalten werden vorzugsweise zumindest zur Kontrolle derjenigen ZKVs eingesetzt, die die Zufahrt zu dem Parkplatz regeln. Hier ist es besonders günstig, dass der Fahrer das Fahrzeug nicht verlassen muss, um die Zufahrtbeschränkung zu öffnen. Oftmals können auf einem Parkplatz weitere Kontrollsysteme 123 vorhanden sein, die zum Beispiel die ZKVs einzelner Räumlichkeiten 120 kontrollieren. Da der Fahrer um diese Räumlichkeiten zu betreten das Fahrzeug typischerweise bereits verlassen hat, müssen diese Kontrollsysteme nicht notwendigerweise auch ein Sendemodul für ein Nahfeldsignal beinhalten. In manchen Ausführungsformen kann ein solches weiteres Kontrollsystem auch lediglich einen optischen Sensor 212 beinhalten, der dem Fahrer Zutritt zu der Räumlichkeit verschafft auf Basis eines Verfahrens, dass bereits für die Kontrolleinheit 112 bzw. den optischen Sensor 212 beschrieben wurde.

**Figur** 3 zeigt ein Blockdiagramm mit weiteren Komponenten des bereits in Figur 1 gezeigten Systems 100 zur Zufahrtskontrolle . Der Fokus von Figur 3 liegt auf einer weiteren ZKV 136 und einem weiteren Kontrollsystem 123, das der ZKV 136 zugeordnet ist und diese steuert. Bei der weiteren ZKV 136 handelt es sich um eine Tür, über welche ein Fahrer sich Zutritt zu einem Gebäude, zum Beispiel zu einem Sanitärbereich, verschaffen kann. Die Tür kann zum Beispiel eine Klinke 202 beinhalten, deren Zustand (offen oder geschlossen bzw. manuell öffenbar oder nicht manuell öffenbar) von dem weiteren Kontrollsystem 123 per Funksignal gesteuert werden kann.

Das weitere Kontrollsystem 123 beinhaltet ein Empfängermodul 211 und ein Funkmodul 216, das in funktionaler Hinsicht den entsprechenden Modulen des Kontrollsystems 112 entspricht und dazu ausgebildet ist, die im Hinblick auf das Kontrollsystem 112 beschriebenen Funktionen auszuführen.

Das in Figur 3 dargestellte weitere Kontrollsystem beinhaltet kein Sendemodul 213 zum Senden eines Nahfeldsignals 133. Der Fahrer kann sich aber mithilfe des grafischen Codes 222 Zutritt zu der Räumlichkeit 120 verschaffen. Zusätzlich oder alternativ dazu kann der Fahrer sich dadurch Zutritt zu der Räumlichkeit 120 verschaffen, dass der Fahrer auf einer GUI der Buchungs-App 126 durch Auswahl eines entsprechenden GUI Elements der App 126 (z.B. "Öffnen") eine Anfrage zum Öffnen der Tür 136 an den Buchungsdienst 130 sendet, z.B. über eine Mobilfunkverbindung des Smartphones 124 des Fahrers. Der Buchungsdienst 130 ist dazu konfiguriert, einem Fahrer, der wirksam einen Stellplatz auf einem Parkplatz gebucht hat, während der Buchungszeit auf Anfrage Zutritt zu der Räumlichkeit 120 zu verschaffen. In Antwort auf den Erhalt der Anfrage prüft der Dienst, ob eine Buchung für den Parkplatz vorliegt und sendet, falls dies der Fall ist, einen Befehl zur Ermöglichung des Zutritts an das Kontrollsystem 123. In Antwort auf den Erhalt dieses Befehls sendet das Kontrollsystem 124 einen Befehl an die Tür 123, der die Tür dazu veranlasst, dem Fahrer den Zutritt zu ermöglichen. Beispielsweise kann der Befehl bewirken, dass sich die Tür automatisch öffnet oder sich ein Verriegelungsmechanismus löst, sodass der Fahrer die Tür öffnen kann.

In anderen Ausführungsformen kann aber auch das weitere Kontrollsystem 123 ein Sendemodul 213 beinhalten, sodass dem Fahrer hier beide Optionen, sich Zutritt zu verschaffen, zur Verfügung stehen.

Vorzugsweise sind das Empfängermodul 211 und das Funkmodul 216 über eine potentialfreie Schnittstelle miteinander verbunden. Dies erleichtert die nachträgliche Installation eines Kontrollsystems für eine bestehende Tür, denn für den Fall, dass bereits eine Tür mit einem Funkempfänger eines bestimmten Typs existiert, ist es bautechnisch besonders einfach, einen zu dem Funkempfänger 204 korrespondierenden Sender 216 mit dem Empfängermodul 211 zu kombinieren. Das Empfängermodul kann also mit Funkmodul 216 unterschiedlichen Typs zusammenarbeiten.

**Figur 4** zeigt ein mobiles Telekommunikationsgeräte 124, zum Beispiel ein Smartphone, auf dessen Display eine GUI der Stellplatz-Buchungs-App 126 angezeigt wird. Auf der GUI wird ein grafischer Code 222 in Form eines QR-Codes, in welchem Buchungsdaten kodiert sind, ausgegeben.

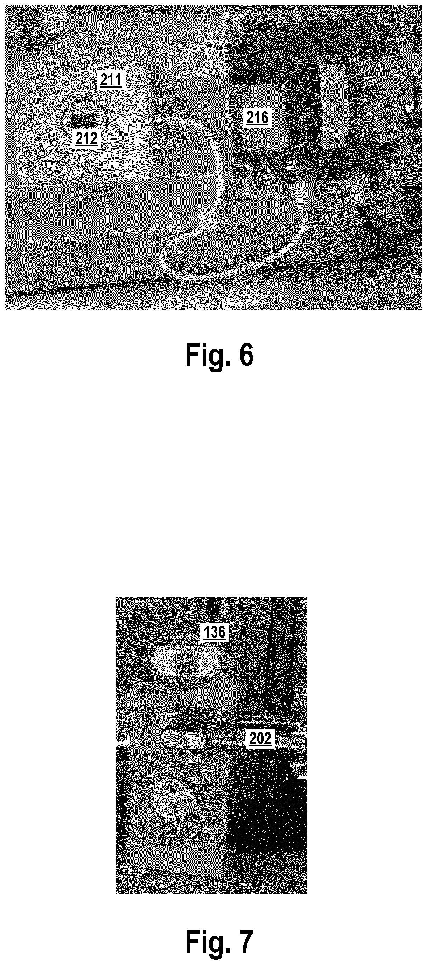

**Figur 6** zeigt ein Foto eines Prototyps von Komponenten eines Kontrollsystems. Die quadratische Box 211 entspricht dem Empfängermodul. Im Zentrum des Empfängermodul befindet sich der optische Sensor 212 in Form einer Kamera, mit der ein grafischer Code 222 erfasst werden kann. Das Empfängermodul kann nach Erhalt eines Befehls 207 zur Zutrittsgewährung oder Zufahrtsgewährung einen weiteren Befehl 208 an das Funkmodul 216 senden und das Funkmodul 216 dadurch veranlassen, einen Steuerbefehl 210 in Form eines Funksignals an einen Funkempfänger 204 der zugeordneten ZKV 136 senden. Diese Funkempfänger kann zum Beispiel Bestandteil einer Türklinke (siehe Figur 7) oder eines Zylinderschlosses eine Tür sein.

**Figur 7** zeigt ein Foto einer mittels Funkbefehlen 210 steuerbaren Türklinke 202.

### Bezugszeichenliste

- 100: System
- 101: Fahrer
- 102: Parkplatz
- 103: Fahrzeug
- 104: Stellplatz
- 106: Stellplatz
- 108: Stellplatz
- 110: Stellplatz
- 112: Kontrollsystem für ZKV 134
- 120: Räumlichkeit (Gebäude)
- 123: weiteres Kontrollsystem
- 124: mobiles Telekommunikationsgerät
- 126: Stellplatz-Buchungs-App
- 128: Server
- 130: Stellplatz-Buchungsdienst
- 131: Register
- 132: Netzwerk
- 133: kontaktloses Nahfeldsignal
- 134: ZKV (Tor für Parkplatzzufahrt)
- 136: weitere ZKV (Tür)
- 202: Klinke
- 204: Funkempfänger von ZKV
- 206: Gebäudewand
- 207: Befehl zur Zufahrtsgewährung/Zutrittsgewährung
- 210: Steuerbefehl
- 211: Empfängermodul für Befehl vom Server
- 212: optischer Sensor
- 213: Sender von Nahfeldsignal 133
- 214: GSM Schnittstelle
- 215: Ethernet Schnittstelle
- 216: Funkmodul von Kontrollsystem
- 218: Antenne von Funkmodul 216
- 220: Nachricht mit Fahrer-ID und ZKV-Kennung
- 222: grafischer Code
- 402-420: Schritte

## Patentansprüche

1. Verfahren zur Zufahrtskontrolle für Parkplätze, umfassend:
- Bereitstellung (402) eines Servers (128) mit einem Stellplatz-Buchungsdienst (130), wobei bei dem Stellplatz-Buchungsdienst mehrere Fahrer (101) und mehrere Parkplätze (102) mit je ein bis mehreren Stellplätzen (104-110) registriert sind, wobei jeder Parkplatz ein oder mehrere Zugangskontrollvorrichtungen (134, 136) - im Folgenden "ZKVs" bezeichnet - beinhaltet, wobei der Stellplatz-Buchungsdienst jeder der ZKVs ein Kontrollsystem (112,123), das in räumlicher Nähe zu der ZKV angebracht ist, eindeutig zuweist, wobei zumindest einige der Kontrollsysteme jeweils dazu konfiguriert sind, permanent oder wiederholt ein kontaktloses Nahfeldsignal (133) auszusenden, wobei das kontaktlose Nahfeldsignal eine ZKV-Kennung der dem Kontrollsystem zugewiesenen ZKV (134, 136) beinhaltet, wobei die Kontrollsysteme jeweils einen optischen Sensor (212) zur Erfassung eines graphischen Codes (222) beinhalten und ausgebildet sind zur Bereitstellung eines auf dem graphischen Code basierenden alternativen Verfahrens zur Zufahrtskontrolle für den einen Parkplatz;
- nach erfolgreicher Buchung eines Stellplatzes für den einen Fahrer: Erzeugung des graphischen Codes (222) durch den Stellplatz-Buchungsdienst oder durch die Stellplatz-buchungs-App, wobei der graphische Code Buchungsdaten oder einen Verweis auf die Buchungsdaten in codierter Form enthält; und Bereitstellung dieses graphischen Codes (222) an den Fahrer in Form eines Ausdrucks oder eines über die Stellplatz-buchungs-App anzeigbaren digitalen Bildes;
- bei Ankunft eines der Fahrer an einer ZKV eines der Parkplätze, sofern im Bereich des Parkplatzes eine Verbindung eines mobilen Telekommunikationsgeräts (124) des einen Fahrers (101) zum Mobilfunknetz möglich ist:
• Empfang (408) eines der kontaktlos übertragenen Nahfeldsignale (133) mit der Kennung von dem dieser einen ZKV zugeordneten Kontrollsystem (112) durch eine Instanz (126) der Stellplatz-Buchungs-App auf dem mobilen Telekommunikationsgerät (124;
• Senden (410) der empfangenen ZKV-Kennung und einer Fahrer-ID des Fahrers von der Stellplatz-Buchungs-App Instanz an den Stellplatz-Buchungsdienst über ein Netzwerk (132);
• Prüfung (412), durch den Stellplatz-Buchungsdienst, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet;
• Nur falls eine gültige Buchung vorliegt, Senden (414) eines Befehls zur Zufahrtsgewährung vom Stellplatz-Buchungsdienst an das Kontrollsystem;
• in Antwort auf den Erhalt des Befehls zur Zufahrtsgewährung, Senden (416) eines Steuerbefehls von dem Kontrollsystem an die ihr zugeordnete ZKV (134) um zu bewirken, dass die ZKV die Zufahrt auf den Parkplatz ermöglicht;
- Bei Ankunft eines der Fahrer an der ZKV, auch dann, wenn im Bereich des Parkplatzes eine Verbindung des mobilen Telekommunikationsgeräts zum Mobilfunknetz nicht möglich ist:
• Erfassen des graphischen Codes durch den optischen Sensor und Ermöglichung der Zufahrt für den Fahrer zu dem einen Parkplatz in Abhängigkeit von dem graphischen Code, wobei die Ermöglichung der Zufahrt in Abhängigkeit von dem erfassten graphischen Code umfasst:
- Senden des erfassten graphischen Codes vom optischen Sensor über ein Netzwerk an den Stellplatz-Buchungsdienst;
- Prüfung, durch den Stellplatz-Buchungsdienst, ob eine in dem graphischen Code spezifizierte oder durch den graphischen Code identifizierte Buchung für diesen einen Fahrer gültig ist;
- Nur falls eine gültige Buchung vorliegt, Senden eines Befehls zur Zufahrtsgewährung vom Stellplatz-Buchungsdienst an das Kontrollsystem;
- in Antwort auf den Erhalt des Befehls zur Zufahrtsgewährung, Senden eines Steuerbefehls von dem Kontrollsystem an die ihr zugeordnete ZKV (134) um zu bewirken, dass die ZKV die Zufahrt auf den Parkplatz ermöglicht.

2. Verfahren nach einem der vorigen Ansprüche, ferner umfassend:
- Verwendung (404) einer Stellplatz-Buchungs-App (126) oder einer Web-Applikation um einen der Stellplätze für einen der registrierten Fahrer zu buchen.

3. Verfahren nach einem der vorigen Ansprüche, wobei der eine Parkplatz, an dessen einer ZKV der Fahrer ankommt, eine weitere ZKV (136) umfasst, die den Zutritt zu einer Räumlichkeit (120) innerhalb des Parkplatzes beschränkt, wobei der weiteren ZKV ein weiteres Kontrollsystem (123) zugewiesen ist und in räumlicher Nähe zu der weiteren ZKV angebracht ist, wobei das weitere Kontrollsystem einen optischen Sensor zur Erfassung eines graphischen Codes beinhaltet, wobei das weitere Kontrollsystem ausgebildet ist zur Bereitstellung eines code-basierten Verfahrens zur Zutrittsgewährung zu der Räumlichkeit, umfassend:
- Bei Ankunft des Fahrers an dem weiteren Kontrollsystem: Erfassen des graphischen Codes durch den optischen Sensor des weiteren Kontrollsystems und Ermöglichung des Zutritts für den Fahrer in die Räumlichkeit in Abhängigkeit von dem graphischen Code.

4. Verfahren nach einem der vorigen Ansprüche,
- wobei jedes der Kontrollsysteme über eine Netzwerkschnittstelle (214, 215) zur Übermittlung von Daten, insbesondere des graphischen Codes, über eine Netzwerkverbindung mit gesicherter Verfügbarkeit an den Stellplatz-Buchungs-Dienst und zum Empfang von Befehlen zur Zufahrtsgewährung und/oder Zutrittsgewährung von dem Stellplatz-Buchungs-Dienst umfasst; und/oder
- wobei jedes der Kontrollsysteme über eine kontaktlose Schnittstelle, insbesondere eine Funkschnittstelle, zum Senden von Steuerbefehlen an die dem Kontrollsystem jeweils zugeordnete ZKV umfasst.

5. Verfahren nach einem der vorigen Ansprüche, wobei das Nahfeldsignal ausgewählt ist aus einer Gruppe umfassend ein Funksignal, ein per WLAN übermitteltes Signal, ein Bluetooth Signal, ein NFC Signal, ein RFID Signal, ein iBeacon-Signal; und/oder wobei die Reichweite des Nahfeldsignals kürzer ist als 30 m.

6. Verfahren nach einem der vorigen Ansprüche, wobei es sich bei dem einen Parkplatz um einen LKW-Parkplatz handelt und wobei es sich bei dem Fahrer um den Fahrer eines LKW handelt.

7. Verfahren nach einem der vorigen Ansprüche, wobei die ein oder mehreren Zugangskontrollvorrichtungen ausgewählt sind aus einer Gruppe umfassend:
- eine Tür,
- ein Tor,
- ein Türverriegelungsmechanismus,
- ein Torverriegelungsmechanismus,
- ein versenkbarer Poller,
- eine Kombination mehrerer Elemente dieser Gruppe.

8. System zur Zufahrtskontrolle für Parkplätze, umfassend:
- einen Server (128) mit einem Stellplatz-Buchungsdienst (130), wobei bei dem Stellplatz-Buchungsdienst mehrere Fahrer (101) und mehrere Parkplätze (102) mit je ein bis mehreren Stellplätzen (104-110) registriert sind, wobei jeder Parkplatz ein oder mehrere Zugangskontrollvorrichtungen (134, 136) - im Folgenden "ZKVs" bezeichnet - beinhaltet, wobei der Stellplatz-Buchungsdienst jeder der ZKVs ein Kontrollsystem (112,123), das in räumlicher Nähe zu der ZKV angebracht ist, eindeutig zuweist, wobei zumindest einige der Kontrollsysteme jeweils dazu konfiguriert sind, permanent oder wiederholt ein kontaktloses Nahfeldsignal (133) auszusenden, wobei das kontaktloses Nahfeldsignal eine ZKV-Kennung der dem Kontrollsystem zugewiesenen ZKV (134, 136) beinhaltet, wobei der Stellplatz-Buchungsdienst oder eine mit dem Stellplatz-Buchungsdienst interoperable Stellplatz-buchungs-App dazu konfiguriert ist, nach erfolgreicher Buchung eines Stellplatzes für einen der Fahrer einen graphischen Code (222) zu erzeugen, wobei der graphische Code Buchungsdaten oder einen Verweis auf die Buchungsdaten in codierter Form enthält, und dazu konfiguriert ist, diesen graphischen Code (222) an den einen Fahrer in Form eines Ausdrucks oder eines über die Stellplatz-buchungs-App anzeigbaren digitalen Bildes bereitzustellen;
• ein (112) der Kontrollsystem, wobei das Kontrollsystem einen optischen Sensor (212) zur Erfassung des graphischen Codes (222) beinhaltet, um ein alternatives Verfahren zur Zufahrtskontrolle für den einen Parkplatz zu ermöglichen, das auch für den Fall durchführbar ist, dass im Bereich des einen Parkplatzes keine Verbindung eines mobilen Telekommunikationsgeräts des einen Fahrers zum Mobilfunknetz möglich ist, wobei das alternative Verfahren umfasst: Bei Ankunft des einen Fahrers an einer ZKV, die in räumlicher Nähe zu dem Kontrollsystem angebracht ist, Erfassen des graphischen Codes durch den optischen Sensor und Ermöglichung der Zufahrt für den Fahrer zu dem einen Parkplatz in Abhängigkeit von dem graphischen Code, wobei die Ermöglichung der Zufahrt in Abhängigkeit von dem erfassten graphischen Code umfasst:
- Senden des erfassten graphischen Codes vom optischen Sensor über ein Netzwerk an den Stellplatz-Buchungsdienst;
- Prüfung, durch den Stellplatz-Buchungsdienst, ob eine in dem graphischen Code spezifizierte oder durch den graphischen Code identifizierte Buchung für diesen einen Fahrer gültig ist;
- Nur falls eine gültige Buchung vorliegt, Senden eines Befehls zur Zufahrtsgewährung vom Stellplatz-Buchungsdienst an das Kontrollsystem;
- in Antwort auf den Erhalt des Befehls zur Zufahrtsgewährung, Senden eines Steuerbefehls von dem Kontrollsystem an die ihr zugeordnete ZKV (134) um zu bewirken, dass die ZKV die Zufahrt auf den Parkplatz ermöglicht;
- das mobile Telekommunikationsgerät des einen Fahrers, wobei das mobile Telekommunikationsgerät eine Instanz der Stellplatz-Buchungs-App beinhaltet,
wobei die Stellplatz-Buchungs-App ausgebildet ist, folgendes Verfahren durchzuführen, sofern im Bereich des Parkplatzes eine Verbindung zum Mobilfunknetz möglich ist:
• Empfangen eines der kontaktlos übertragenen Nahfeldsignale (133) von dem einem (112) Kontrollsystem bei Ankunft des einen Fahrers an der einen ZKV, wobei das kontaktlos übertragene Nahfeldsignal eine ZKV-Kennung der einen ZKV beinhaltet;
• Senden der empfangenen ZKV-Kennung und einer Fahrer-ID des Fahrers an den Stellplatz-Buchungsdienst über ein Netzwerk (132);
wobei der Stellplatz-Buchungsdienst ausgebildet ist zum:
• Prüfen, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet, vorliegt;
• Nur falls eine gültige Buchung vorliegt, Senden eines Befehls zur Zufahrtsgewährung an das eine Kontrollsystem;
wobei der Stellplatz-Buchungsdienst ferner ausgebildet ist zum:
• Empfangen des erfassten graphischen Codes vom optischen Sensor über ein Netzwerk;
• Prüfung, ob eine in dem graphischen Code spezifizierte oder durch den graphischen Code identifizierte Buchung für diesen einen Fahrer gültig ist;
• Nur falls eine gültige Buchung vorliegt, Senden eines Befehls zur Zufahrtsgewährung an das eine Kontrollsystem;
wobei das eine Kontrollsystem ausgebildet ist zum:
• in Antwort auf den Erhalt des Befehls zur Zufahrtsgewährung, Senden eines Steuerbefehls von dem Kontrollsystem an das eine ihr zugeordneten ZKV (134) um zu bewirken, dass die ZKV die Zufahrt auf den Parkplatz ermöglicht.

9. System nach Anspruch 8, wobei jedes der Kontrollsysteme über eine kontaktlose Schnittstelle, insbesondere eine Funkschnittstelle, zum Senden von Steuerbefehlen an die dem Kontrollsystem jeweils zugeordnete ZKV umfasst.

10. System nach einem der Ansprüche 8-9, ferner umfassend ein weiteres Kontrollsystem (123), das einer weiteren ZKV (136) zugewiesen ist und das sich in räumlicher Nähe zu der weiteren ZKV befindet, wobei der eine Parkplatz, an dessen einer ZKV der Fahrer ankommt, eine Räumlichkeit (120) umfasst und die weitere ZKV den Zutritt zu der Räumlichkeit beschränkt, wobei das weitere Kontrollsystem einen optischen Sensor zur Erfassung eines graphischen Codes beinhaltet, wobei das weitere Kontrollsystem einen optischen Sensor zur Erfassung des graphischen Codes, der als angezeigtes digitales Bild oder als Ausdruck vorliegt, beinhaltet.

11. Computerprogrammprodukt zur Zufahrtsgewährung zu Parkplätzen, umfassend:
- ein Stellplatz-Buchungsdienst (130) mit einem Register (131), wobei in dem Register Nutzerprofile mehrerer registrierter Fahrer (101) und Datensätze mehrerer registrierter Parkplätze (102) mit je ein bis mehreren Stellplätzen (104-110) gespeichert sind, wobei jeder Parkplatz ein oder mehrere Zugangskontrollvorrichtungen (134, 136) - im Folgenden "ZKVs" bezeichnet - beinhaltet, wobei das Register des Stellplatz-Buchungsdienstes jeder der ZKVs ein Kontrollsystem (112,123), das in räumlicher Nähe zu der ZKV angebracht ist, eindeutig zuweist;
- eine Stellplatz-Buchungs-App,
wobei der Stellplatz-Buchungsdienst oder die Stellplatz-Buchungs-App dazu konfiguriert ist, nach erfolgreicher Buchung eines Stellplatzes für einen der Fahrer einen graphischen Code (222) zu erzeugen, wobei der graphische Code Buchungsdaten oder einen Verweis auf die Buchungsdaten in codierter Form enthält, und dazu konfiguriert ist, diesen graphischen Code (222) an den einen Fahrer in Form eines Ausdrucks oder eines über die Stellplatz-buchungs-App anzeigbaren digitalen Bildes bereitzustellen,
wobei die Stellplatz-Buchungs-App ausgebildet ist zur Durchführung des folgenden Verfahrens falls im Bereich des Parkplatzes eine Verbindung zum Mobilfunknetz möglich ist:
• bei Ankunft des einen Fahrers an einer ZKV eines der Parkplätze, Empfang (408) eines kontaktlos übertragenen Nahfeldsignals (133) von dem dieser einen ZKV zugeordneten Kontrollsystem (112), wobei eine Fahrer-ID des einen Fahrers in der Stellplatz-Buchungs-App gespeichert ist, wobei das kontaktlos übertragene Nahfeldsignal eine ZKV-Kennung der einen ZKV beinhaltet;
• Senden einer Nachricht (220) mit der empfangenen ZKV-Kennung und der Fahrer-ID des Fahrers an den Stellplatz-Buchungsdienst über ein Netzwerk (132);
wobei der Stellplatz-Buchungsdienst ausgebildet ist zum:
• Prüfen, ob für den durch die Fahrer-ID identifizierten Fahrer eine gültige Buchung für einen der Stellplätze desjenigen der Parkplätze vorliegt, der die durch die ZKV-Kennung identifizierte ZKV beinhaltet, vorliegt;
• Nur falls eine gültige Buchung vorliegt, Senden eines Befehls zur Zufahrtsgewährung an dasjenige der Kontrollsysteme das der einen ZKV zugewiesen ist;
- wobei die Stellplatz-Buchungs-App ausgebildet ist zur Anzeige des graphischen Codes für die Durchführung eines alternativen Verfahrens zur Zufahrtskontrolle für dem einen Parkplatz, das auch durchführbar ist, falls im Bereich des Parkplatzes keine Verbindung zum Mobilfunknetz möglich ist;
wobei der Stellplatz-Buchungsdienst ferner ausgebildet ist zum:
• Empfangen des vom optischen Sensor erfassten graphischen Codes über ein Netzwerk;
• Prüfung, ob eine in dem graphischen Code spezifizierte oder durch den graphischen Code identifizierte Buchung für diesen einen Fahrer gültig ist;
• Nur falls eine gültige Buchung vorliegt, Senden eines Befehls zur Zufahrtsgewährung an das eine Kontrollsystem
- maschinenausführbare Instruktionen des einen Kontrollsystems, wobei die Ermöglichung der Zufahrt in Abhängigkeit von dem erfassten graphischen Code seitens des Kontrollsystems umfasst:
• Senden des erfassten graphischen Codes vom optischen Sensor über ein Netzwerk an den Stellplatz-Buchungsdienst;
• Empfang eines Befehls zur Zufahrtsgewährung vom Stellplatz-Buchungsdienst durch das Kontrollsystem, falls eine gültige Buchung vorliegt;
• in Antwort auf den Erhalt des Befehls zur Zufahrtsgewährung, Senden eines Steuerbefehls von dem Kontrollsystem an die ihr zugeordnete ZKV (134) um zu bewirken, dass die ZKV die Zufahrt auf den Parkplatz ermöglicht.

12. Computerprogrammprodukt nach Anspruch 11, wobei die Stellplatz-Buchungs-App ausgebildet ist zum:
- in Antwort auf eine Nachricht des Stellplatz-Buchungsdienstes, dass eine Buchung eines der Stellplätze für den einen Fahrer von der Stellplatz-Buchungs-App oder von einer anderen Applikation erfolgreich durchgeführt wurde, Erzeugen einer GUI mit Angaben zu der Buchung;
- Anzeige oder Aktivierung eines auswählbaren GUI-Element in der GUI so, dass der eine Fahrer das GUI Element auswählen kann, wobei die Anzeige oder Aktivierung des auswählbaren GUI-Elements bedeutet, dass dem Fahrer hierdurch die Möglichkeit gegeben wird, durch Auswahl des angezeigten oder aktivierten GUI-Elements das Senden einer ZKV-Öffnungs-Anfrage an den Stellplatz-Buchungsdienst zu veranlassen, wobei der Empfang der ZKV-Öffnungs-Anfrage den Stellplatz-Buchungsdienst dazu veranlasst, den Befehl zur Zufahrtsgewährung an das Kontrollsystem zu veranlassen, wobei die Anzeige oder Aktivierung des auswählbaren GUI-Elements erst dann erfolgt, wenn die Stellplatz-Buchungs-App beim Erreichen der ZKV das Nahfeldsignal mit der ZKV-Kennung dieser ZKV empfängt; und
- Senden der ZKV-Öffnungs-Anfrage in Reaktion auf eine Auswahl des GUI-Elements durch den einen Fahrer.

## Claims

1. An access control method for car parks, comprising the steps of:
- providing (402) a server (128) with a parking space booking service (130), wherein a plurality of drivers (101) and a plurality of car parks (102) each with one to a plurality of parking spaces (104-110) are registered with the parking space booking service, wherein each car park includes one or more access control devices (134, 136) - hereinafter referred to as "ACDs" - wherein the parking space booking service uniquely assigns *to each* of the ACDs a control system (112, 123) located in spatial proximity to the ACD, wherein at least some of the control systems are in each case configured to permanently or repeatedly emit a contactless near-field signal (133), wherein the contactless near-field signal includes an ACD identifier of the ACD (134, 136) assigned to the control system, wherein the control systems each include an optical sensor (212) for detecting a graphic code (222) and are configured to provide an alternative method of access control for the one car park based on the graphic code;
- after successful booking of a parking space for the one driver: generating the graphic code (222) by the parking space booking service or by the parking space booking app, wherein the graphic code contains booking data or a reference to the booking data in coded form; and providing this graphic code (222) to the driver in the form of a printout or a digital image that may be displayed via the parking space booking app;
- on arrival of one of the drivers at an ACD of one of the car parks, provided that a connection of a mobile telecommunications device (124) of the one driver (101) to the mobile network is possible in the area of the car park:
• receiving (408), by an instance (126) of the parking space booking app on the mobile telecommunications device (124), of one of the contactlessly transmitted near-field signals (133) with the identifier from the control system (112) associated with this one ACD;
• sending (410) the received ACD identifier and a driver ID of the driver from the parking space booking app to the parking space booking service via a network (132);
• checking (412), by the parking space booking service, whether there is a valid booking for the driver identified by the driver ID for one of the parking spaces of the car park that contains the ACD identified by the ACD identifier;
• only if there is a valid booking, sending (414) a granting-of-access command from the parking space booking service to the control system;
• in response to receiving the granting-of-access command, sending (416) a control command from the control system to its associated ACD (134) to cause the ACD to allow access to the car park;
- when one of the drivers arrives at the ACD, even if it is not possible to connect the mobile telecommunications device to the mobile network in the car park area:
• detecting the graphic code by the optical sensor and enabling access for the driver to the one car park depending on the graphic code, wherein the enabling of access in dependence on the detected graphic code comprises:
- sending the detected graphic code from the optical sensor via a network to the parking space booking service;
- checking, by the parking space booking service, whether a booking specified in the graphic code or identified by the graphic code is valid for this one driver;
- only if there is a valid booking, sending a granting-of-access command from the parking space booking service to the control system;
- in response to receiving the granting-of-access command, sending a control command from the control system to the ACD associated with it (134) to cause the ACD to allow access to the car park.

2. The method according to any one of the preceding claims, further comprising the step of:
- using (404) a parking space booking app (126) or a web application to book one of the parking spaces for one of the registered drivers.

3. The method according to any one of the preceding claims, wherein the one car park, at an ACD of which the driver arrives, comprises a further ACD (136) which restricts access to a space (120) within the car park, wherein the further ACD is assigned a further control system (123) and is mounted in spatial proximity to the further ACD, wherein the further control system includes an optical sensor for detecting a graphic code, wherein the further control system is configured to provide a code-based method for granting access to the space, comprising the step of:
- on arrival of the driver at the further control system: detecting the graphic code by the optical sensor of the further control system and allowing the driver to enter the space depending on the graphic code.

4. The method according to any one of the preceding claims,
- wherein each of the control systems comprises a network interface (214, 215) for transmitting data, in particular the graphic code, via a network connection with secure availability to the parking space booking service and for receiving granting-of-access and/or granting-of-entry commands from the parking space booking service; and/or
- wherein each of the control systems comprises a contactless interface, in particular a radio interface, for sending control commands to the respective ACD associated with the control system.

5. The method according to any one of the preceding claims, wherein the near-field signal is selected from a group comprising a radio signal, a signal transmitted via WLAN, a Bluetooth signal, an NFC signal, an RFID signal, an iBeacon signal; and/or wherein the range of the near-field signal is shorter than 30 m.

6. The method according to any one of the preceding claims, wherein the one car park is a lorry car park, and wherein the driver is the driver of a lorry.

7. The method according to any one of the preceding claims, wherein the one or more access control devices are selected from a group comprising:
- a door,
- a gate
- a door locking mechanism,
- a gate locking mechanism,
- a retractable bollard,
- a combination of a plurality of elements from this group.

8. An access control system for car parks, comprising:
- a server (128) with a parking space booking service (130), wherein a plurality of drivers (101) and a plurality of car parks (102) each with one to a plurality of parking spaces (104-110) are registered with the parking space booking service, wherein each car park includes one or more access control devices (134, 136) - hereinafter referred to as "ACDs" - wherein the parking space booking service uniquely assigns to each of the ACDs a control system (112, 123) located in spatial proximity to the ACD, wherein at least some of the control systems are in each case configured to permanently or repeatedly emit a contactless near-field signal (133), wherein the contactless near-field signal includes an ACD identifier of the ACD (134, 136) assigned to the control system, wherein the parking space booking service or a parking space booking app interoperable with the parking space booking service is configured, after successful booking of a parking space, to generate a graphic code (222) for one of the drivers, wherein the graphic code contains booking data or a reference to the booking data in coded form and is configured to provide this graphic code (222) to the one driver in the form of a printout or a digital image that may be displayed via the parking space booking app;
• a (112) control system, wherein the control system includes an optical sensor (212) for detecting the graphic code (222) to enable an alternative method for controlling access to the one car park which is also executable in the event that a mobile telecommunications device of the one driver is unable to be connected to the mobile network in the area of the one car park, wherein the alternative method comprises: on arrival of the one driver at an ACD located in spatial proximity to the control system, detecting the graphic code by the optical sensor and enabling access for the driver to the one car park in dependence on the graphic code, wherein the enabling of access in dependence on the detected graphic code comprises:
- sending the detected graphic code from the optical sensor via a network to the parking space booking service;
- checking, by the parking space booking service, whether a booking specified in the graphic code or identified by the graphic code is valid for this one driver;
- only if there is a valid booking, sending a granting-of-access command from the parking space booking service to the control system;
- in response to receiving the granting-of-access command, sending a control command from the control system to the ACD associated with it (134) to cause the ACD to allow access to the car park;
- the mobile telecommunications of the one driver, wherein the mobile telecommunications device includes an instance of the parking space booking app,
wherein the parking space booking app is configured to carry out the following method if a connection to the mobile network is possible in the area of the car park:
• receiving one of the contactlessly transmitted near-field signals (133) from the one (112) control system on arrival of the one driver at the one ACD, wherein the contactlessly transmitted near-field signal includes an ACD identifier of the one ACD;
• sending the received ACD identifier and a driver ID of the driver to the parking space booking service via a network (132) ;
wherein the parking space booking service is configured to:
• check whether there is a valid booking for the driver identified by the driver ID for one of the parking spaces of the car park that contains the ACD identified by the ACD identifier;
• only if there is a valid booking, sending a granting-of-access command to the one control system;
wherein the parking space booking service is further configured to:
• receive the detected graphic code from the optical sensor via a network;
• check whether a booking specified in the graphic code or identified by the graphic code is valid for this one driver;
• only if there is a valid booking, sending a granting-of-access command to the one control system;
wherein the one control system is configured:
• in response to receiving the granting-of-access command, to send a control command from the control system to the ACD associated with it (134) to cause the ACD to allow access to the car park.

9. The system according to claim 8, wherein each of the control systems comprises a contactless interface, in particular a radio interface, for sending control commands to the respective ACD associated with the control system.

10. The system according to any one of claims 8-9, further comprising a further control system (123) which is assigned to a further ACD (136) and which is located in spatial proximity to the further ACD, wherein the one car park, at an ACD of which the driver arrives, comprises a space (120) and the further ACD restricts access to the space, wherein the further control system includes an optical sensor for detecting a graphic code, wherein the further control system includes an optical sensor for detecting the graphic code, which is present as a displayed digital image or as a printout.

11. A computer program product for granting access to car parks, comprising:
- a parking space booking service (130) with a register (131), wherein user profiles of a plurality of registered drivers (101) and data records of a plurality of registered car parks (102) each with one to a plurality of parking spaces (104-110) are stored in the register of user profiles, wherein each car park includes one or more access control devices (134, 136) - hereinafter referred to as "ACDs" - wherein the register of the parking space booking service uniquely assigns to each of the ACDs a control system (112, 123) located in spatial proximity to the ACD,
- a parking space booking app,
wherein the parking space booking service or the parking space booking app is configured, after successful booking of a parking space, to generate a graphic code (222) for one of the drivers, wherein the graphic code contains booking data or a reference to the booking data in coded form and is configured to provide this graphic code (222) to the one driver in the form of a printout or a digital image that may be displayed via the parking space booking app;
wherein the parking space booking app is configured to carry out the following method if a connection is able to be made to the mobile network in the area of the car park:
• on arrival of the one driver at an ACD of one of the parking spaces, receiving (408) a contactlessly transmitted near-field signal (133) from the control system (112) associated with this ACD, wherein a driver ID of the one driver is stored in the parking space booking app, wherein the contactlessly transmitted near-field signal includes an ACD identifier of the one ACD;
• sending a message (220) with the received ACD identifier and the driver ID of the driver to the parking space booking service via a network (132);
wherein the parking space booking service is configured to:
• check whether there is a valid booking for the driver identified by the driver ID for one of the parking spaces of the car park that contains the ACD identified by the ACD identifier;
• only if there is a valid booking, send a granting-of-access command to the control system assigned to the one ACD;
- wherein the parking space booking app is configured to display the graphic code for carrying out an alternative method for access control for the one parking space, which alternative method is also executable if no connection to the mobile network is possible in the area of the parking space;
wherein the parking space booking service is further configured to:
• receive the graphic code detected by the optical sensor via a network;
• check whether a booking specified in the graphic code or identified by the graphic code is valid for this one driver;
• only if there is a valid booking, send a granting-of-access command to the one control system
- machine-executable instructions of the one control system, wherein the enabling of the access in dependence on the detected graphic code by the control system comprises:
• sending the detected graphic code from the optical sensor via a network to the parking space booking service;
• receiving a granting-of-access command from the parking space booking service by the control system if a valid booking has been made;
• in response to receiving the granting-of-access command, sending a control command from the control system to the ACD associated with it (134) to cause the ACD to allow access to the car park.

12. The computer program product according to claim 11, wherein the parking space booking app is configured to:
- in response to a message from the parking space booking service that a booking of one of the parking spaces has been successfully made for the one driver from the parking space booking app or from another application, generating a GUI with details of the booking;
- displaying or activating a selectable GUI element in the GUI such that the one driver may select the GUI element, wherein the display or activation of the selectable GUI element means that the driver is hereby given the possibility to cause the sending of an ACD opening request to the parking space booking service by selecting the displayed or activated GUI element, wherein the receipt of the ACD opening request causes the parking space booking service to initiate the granting-of-access command to the control system, wherein the display or activation of the selectable GUI element only takes place when the parking space booking app receives the near-field signal with the ACD identifier of this ACD when the ACD is reached; and
- sending the ACD opening request in response to a selection of the GUI element by the one driver.

## Revendications

1. Méthode de contrôle d'accès pour parkings, comprenant les étapes consistant à :
- fournir (402) à un serveur (128) un service de réservation d'espace de parking (130), dans laquelle une pluralité de conducteurs (101) et une pluralité de parkings (102) chacun avec un à une pluralité d'espaces de parking (104 à 110) sont enregistrées auprès du service de réservation d'espace de parking, dans laquelle chaque parking comprend un ou plusieurs dispositifs de contrôle d'accès (134, 136) - appelés dans la suite « ACD » - dans laquelle le service de réservation d'espace de parking attribue de manière unique *à chacun* des ACD un système de contrôle (112, 123) situé en proximité spatiale de l'ACD, dans laquelle au moins certains des systèmes de contrôle sont dans chaque cas configurés pour émettre de manière permanente ou répétée un signal de champ proche sans contact (133), dans laquelle le signal de champ proche sans contact comprend un identifiant d'ACD de l'ACD (134, 136) attribué au système de contrôle, dans laquelle les systèmes de contrôle comprennent chacun un capteur optique (212) pour détecter un code graphique (222) et sont configurés pour fournir une méthode alternative de contrôle d'accès pour le parking concerné en se basant sur le code graphique ;
- après une réservation réussie d'un espace de parking pour le conducteur concerné : générer le code graphique (222) au moyen du service de réservation d'espace de parking ou au moyen de l'application de réservation d'espace de parking, dans laquelle le code graphique contient des données de réservation ou une référence aux données de réservation sous forme codée ; et fournir ce code graphique (222) au conducteur sous la forme d'une impression ou d'une image numérique qui peut être affichée par le biais de l'application de réservation d'espace de parking ;
- à l'arrivée de l'un des conducteurs au niveau d'un ACD de l'un des parkings, à la condition qu'une connexion d'un dispositif de télécommunication mobile (124) du conducteur concerné (101) au réseau mobile soit possible dans la zone du parking :
• recevoir (408), au moyen d'une instance (126) de l'application de réservation d'espace de parking sur le dispositif de télécommunication mobile (124), l'un des signaux de champ proche transmis sans contact (133) avec l'identifiant du système de contrôle (112) associé à cet ACD ;
• envoyer (410) l'identifiant d'ACD reçu et un ID du conducteur depuis l'application de réservation d'espace de parking au service de réservation d'espace de parking par le biais d'un réseau (132) ;
• vérifier (412), au moyen du service de réservation d'espace de parking, s'il existe une réservation valide pour le conducteur identifié par l'ID de conducteur pour l'un des espaces de parking du parking qui contient l'ACD identifié par l'identifiant d'ACD ;
• uniquement s'il existe une réservation valide, envoyer (414) une commande d'octroi d'accès depuis le service de réservation d'espace de parking au système de contrôle ;
• en réponse à la réception de la commande d'octroi d'accès, envoyer (416) une commande de contrôle depuis le système de contrôle à son ACD (134) associé pour amener l'ACD à autoriser l'accès au parking ;
- lorsque l'un des conducteurs arrive au niveau de l'ACD, même s'il n'est pas possible de connecter le dispositif de télécommunication mobile au réseau mobile dans la zone du parking :
• détecter le code graphique au moyen du capteur optique et permettre l'accès du conducteur au parking concerné en fonction du code graphique, dans laquelle la permission d'accès en fonction du code graphique détecté comprend les étapes consistant à :
- envoyer le code graphique détecté depuis le capteur optique par le biais d'un réseau au service de réservation d'espace de parking ;
- vérifier, au moyen du service de réservation d'espace de parking, si une réservation spécifiée dans le code graphique ou identifiée par le code graphique est valide pour ce conducteur ;
- uniquement s'il existe une réservation valide, envoyer une commande d'octroi d'accès depuis le service de réservation d'espace de parking au système de contrôle ;
- en réponse à la réception de la commande d'octroi d'accès, envoyer une commande de contrôle depuis le système de contrôle à l'ACD (134) qui lui est associé pour amener l'ACD à autoriser l'accès au parking.

2. Méthode selon l'une quelconque des revendications précédentes, comprenant en outre l'étape consistant à :
- utiliser (404) une application de réservation d'espace de parking (126) ou une application web pour réserver l'un des espaces de parking pour l'un des conducteurs enregistrés.

3. Méthode selon l'une quelconque des revendications précédentes, dans laquelle le parking concerné, au niveau d'un ACD duquel arrive le conducteur, comprend un ACD (136) supplémentaire qui restreint l'accès à un espace (120) à l'intérieur du parking, dans laquelle l'ACD supplémentaire se voit attribuer un système de contrôle (123) supplémentaire et est monté en proximité spatiale de l'ACD supplémentaire, dans laquelle le système de contrôle supplémentaire comprend un capteur optique pour détecter un code graphique, dans laquelle le système de contrôle supplémentaire est configuré pour fournir une méthode basée sur un code pour octroyer l'accès à l'espace, comprenant l'étape consistant à :
- à l'arrivée du conducteur au niveau du système de contrôle supplémentaire : détecter le code graphique au moyen du capteur optique du système de contrôle supplémentaire et autoriser le conducteur à entrer dans l'espace en fonction du code graphique.

4. Méthode selon l'une quelconque des revendications précédentes,
- dans laquelle chacun des systèmes de contrôle comprend une interface réseau (214, 215) pour transmettre des données, en particulier le code graphique, par le biais d'une connexion réseau avec disponibilité sécurisée au service de réservation d'espace de parking et pour recevoir des commandes d'octroi d'accès et/ou d'octroi d'entrée depuis le service de réservation d'espace de parking ; et/ou
- dans laquelle chacun des systèmes de contrôle comprend une interface sans contact, en particulier une interface radio, pour envoyer des commandes de contrôle à l'ACD respectif associé au système de contrôle.

5. Méthode selon l'une quelconque des revendications précédentes, dans laquelle le signal de champ proche est choisi dans un groupe comprenant un signal radio, un signal transmis par WLAN, un signal Bluetooth, un signal NFC, un signal RFID, un signal iBeacon ; et/ou dans laquelle la portée du signal de champ proche est plus courte que 30 m.

6. Méthode selon l'une quelconque des revendications précédentes, dans laquelle le parking concerné est un parking pour poids lourd, et dans laquelle le conducteur est le conducteur d'un poids lourd.

7. Méthode selon l'une quelconque des revendications précédentes, dans laquelle le ou les dispositifs de contrôle d'accès sont choisis dans un groupe comprenant :
- une porte,
- un portail
- un mécanisme de verrouillage de porte,
- un mécanisme de verrouillage de portail,
- une borne rétractable,
- une combinaison d'une pluralité d'éléments de ce groupe.

8. Système de contrôle d'accès pour parkings, comprenant :
- un serveur (128) avec un service de réservation d'espace de parking (130), dans lequel une pluralité de conducteurs (101) et une pluralité de parkings (102) chacun avec un à une pluralité d'espaces de parking (104 à 110) sont enregistrées auprès du service de réservation d'espace de parking, dans lequel chaque parking comprend un ou plusieurs dispositifs de contrôle d'accès (134, 136) - appelés dans la suite « ACD » - dans lequel le service de réservation d'espace de parking attribue de manière unique à chacun des ACD un système de contrôle (112, 123) situé en proximité spatiale de l'ACD, dans lequel au moins certains des systèmes de contrôle sont dans chaque cas configurés pour émettre de manière permanente ou répétée un signal de champ proche sans contact (133), dans lequel le signal de champ proche sans contact comprend un identifiant de l'ACD (134, 136) attribué au système de contrôle, dans lequel le service de réservation d'espace de parking ou une application de réservation d'espace de parking interfonctionnelle avec le service de réservation d'espace de parking est configuré, après une réservation réussie d'un espace de parking, pour générer un code graphique (222) pour l'un des conducteurs, dans lequel le code graphique contient des données de réservation ou une référence aux données de réservation sous forme codée et est configuré pour fournir ce code graphique (222) au conducteur concerné sous la forme d'une impression ou d'une image numérique qui peut être affichée par le biais de l'application de réservation d'espace de parking ;
• un système de contrôle (112), dans lequel le système de contrôle comprend un capteur optique (212) pour détecter le code graphique (222) afin de permettre une méthode alternative de contrôle d'accès au parking concerné qui est également exécutable dans le cas où un dispositif de télécommunication mobile du conducteur concerné ne peut pas être connecté au réseau mobile dans la zone du parking concerné, dans lequel la méthode alternative comprend les étapes consistant à : à l'arrivée du conducteur concerné au niveau d'un ACD situé en proximité spatiale du système de contrôle, détecter le code graphique au moyen du capteur optique et permettre l'accès du conducteur au parking concerné en fonction du code graphique, dans lequel la permission d'accès en fonction du code graphique détecté comprend les étapes consistant à :
- envoyer le code graphique détecté depuis le capteur optique par le biais d'un réseau au service de réservation d'espace de parking ;
- vérifier, au moyen du service de réservation d'espace de parking, si une réservation spécifiée dans le code graphique ou identifiée par le code graphique est valide pour ce conducteur ;
- uniquement s'il existe une réservation valide, envoyer une commande d'octroi d'accès depuis le service de réservation d'espace de parking au système de contrôle ;
- en réponse à la réception de la commande d'octroi d'accès, envoyer une commande de contrôle depuis le système de contrôle à l'ACD (134) qui lui est associé pour amener l'ACD à autoriser l'accès au parking ;
- le dispositif de télécommunication mobile du conducteur concerné, dans lequel le dispositif de télécommunication mobile comprend une instance de l'application de réservation d'espace de parking, dans lequel l'application de réservation d'espace de parking est configurée pour mettre en oeuvre la méthode suivante si une connexion au réseau mobile est possible dans la zone du parking :
• recevoir l'un des signaux de champ proche transmis sans contact (133) depuis le système de contrôle (112) concerné à l'arrivée du conducteur concerné au niveau de l'ACD concerné, dans lequel le signal de champ proche transmis sans contact comprend un identifiant de l'ACD concerné ;
• envoyer l'identifiant d'ACD reçu et un ID du conducteur au service de réservation d'espace de parking par le biais d'un réseau (132) ;
dans lequel le service de réservation d'espace de parking est configuré pour :
• vérifier s'il existe une réservation valide pour le conducteur identifié par l'ID de conducteur pour l'un des espaces de parking du parking qui contient l'ACD identifié par l'identifiant d'ACD ;
• uniquement s'il existe une réservation valide, envoyer une commande d'octroi d'accès au système de contrôle concerné ;
dans lequel le service de réservation d'espace de parking est en outre configuré pour :
• recevoir le code graphique détecté depuis le capteur optique par le biais d'un réseau ;
• vérifier si une réservation spécifiée dans le code graphique ou identifiée par le code graphique est valide pour ce conducteur ;
• uniquement s'il existe une réservation valide, envoyer une commande d'octroi d'accès au système de contrôle concerné ;
dans lequel le système de contrôle concerné est configuré :
• en réponse à la réception de la commande d'octroi d'accès, pour envoyer une commande de contrôle depuis le système de contrôle à l'ACD (134) qui lui est associé pour amener l'ACD à autoriser l'accès au parking.

9. Système selon la revendication 8, dans lequel chacun des systèmes de contrôle comprend une interface sans contact, en particulier une interface radio, pour envoyer des commandes de contrôle à l'ACD respectif associé au système de contrôle.

10. Système selon l'une quelconque des revendications 8 à 9, comprenant en outre un système de contrôle (123) supplémentaire qui est attribué à un ACD (136) supplémentaire et qui est situé en proximité spatiale de l'ACD supplémentaire, dans lequel le parking concerné, au niveau d'un ACD au niveau duquel arrive le conducteur, comprend un espace (120) et l'ACD supplémentaire restreint l'accès à l'espace, dans lequel le système de contrôle supplémentaire comprend un capteur optique pour détecter un code graphique, dans lequel le système de contrôle supplémentaire comprend un capteur optique pour détecter le code graphique, qui est présent sous forme d'une image numérique affichée ou d'une impression.

11. Produit de programme informatique destiné à octroyer l'accès à des parkings, comprenant :
- un service de réservation d'espace de parking (130) avec un registre (131), dans lequel des profils utilisateurs d'une pluralité de conducteurs enregistrés (101) et des dossiers de données d'une pluralité de parkings enregistrés (102) chacun avec un à une pluralité d'espaces de parking (104 à 110) sont stockés dans le registre de profils utilisateurs, dans lequel chaque parking comprend un ou plusieurs dispositifs de contrôle d'accès (134, 136) - appelés dans la suite « ACD » - dans lequel le registre du service de réservation d'espace de parking attribue de manière unique à chacun des ACD un système de contrôle (112, 123) situé en proximité spatiale de l'ACD,
- une application de réservation d'espace de parking,
dans lequel le service de réservation d'espace de parking ou l'application de réservation d'espace de parking est configuré, après réservation réussie d'un espace de parking, pour générer un code graphique (222) pour l'un des conducteurs,
dans lequel le code graphique contient des données de réservation ou une référence aux données de réservation sous forme codée et
est configuré pour fournir ce code graphique (222) au conducteur concerné sous la forme d'une impression ou d'une image numérique qui peut être affichée par le biais de l'application de réservation d'espace de parking ;
dans lequel l'application de réservation d'espace de parking est configurée pour mettre en oeuvre la méthode suivante si une connexion au réseau mobile est possible dans la zone du parking :
• à l'arrivée du conducteur concerné au niveau d'un ACD de l'un des espaces de parking, recevoir (408) un signal de champ proche transmis sans contact (133) depuis le système de contrôle (112) associé à cet ACD, dans lequel un ID du conducteur concerné est stocké dans l'application de réservation d'espace de parking, dans lequel le signal de champ proche transmis sans contact comprend un identifiant de l'ACD concerné ;
• envoyer un message (220) avec l'identifiant d'ACD reçu et l'ID du conducteur au service de réservation d'espace de parking par le biais d'un réseau (132) ;
dans lequel le service de réservation d'espace de parking est configuré pour :
• vérifier s'il existe une réservation valide pour le conducteur identifié par l'ID de conducteur pour l'un des espaces de parking du parking qui contient l'ACD identifié par l'identifiant d'ACD ;
• uniquement s'il existe une réservation valide, envoyer une commande d'octroi d'accès au système de contrôle attribué à l'ACD concerné ;
- dans lequel l'application de réservation d'espace de parking est configurée pour afficher le code graphique afin de mettre en oeuvre une méthode alternative de contrôle d'accès à l'espace de parking concerné, laquelle méthode alternative est également exécutable si aucune connexion au réseau mobile n'est possible dans la zone de l'espace de parking ;
dans lequel le service de réservation d'espace de parking est en outre configuré pour :
• recevoir le code graphique détecté par le capteur optique par le biais d'un réseau ;
• vérifier si une réservation spécifiée dans le code graphique ou identifiée par le code graphique est valide pour ce conducteur ;
• uniquement s'il existe une réservation valide, envoyer une commande d'octroi d'accès au système de contrôle concerné
- des instructions exécutables par machine du système de contrôle concerné, dans lequel la permission d'accès en fonction du code graphique détecté par le système de contrôle comprend les étapes consistant à :
• envoyer le code graphique détecté depuis le capteur optique par le biais d'un réseau au service de réservation d'espace de parking ;
• recevoir une commande d'octroi d'accès depuis le service de réservation d'espace de parking par le système de contrôle si une réservation valide a été réalisée ;
• en réponse à la réception de la commande d'octroi d'accès, envoyer une commande de contrôle depuis le système de contrôle à l'ACD (134) qui lui est associé pour amener l'ACD à autoriser l'accès au parking.

12. Produit de programme informatique selon la revendication 11, dans lequel l'application de réservation d'espace de parking est configurée pour :
- en réponse à un message du service de réservation d'espace de parking selon lequel une réservation de l'un des espaces de parking a été réalisée avec succès pour le conducteur concerné depuis l'application de réservation d'espace de parking ou depuis une autre application, générer une GUI avec les détails de la réservation ;
- afficher ou activer un élément de GUI sélectionnable dans la GUI de telle sorte que le conducteur concerné peut sélectionner l'élément de GUI, dans lequel l'affichage ou l'activation de l'élément de GUI sélectionnable signifie que le conducteur reçoit par ce biais la possibilité de provoquer l'envoi d'une requête d'ouverture d'ACD au service de réservation d'espace de parking en sélectionnant l'élément de GUI affiché ou activé, dans lequel la réception de la requête d'ouverture d'ACD amène le service de réservation d'espace de parking à initier la commande d'octroi d'accès au système de contrôle, dans lequel l'affichage ou l'activation de l'élément de GUI sélectionnable a uniquement lieu lorsque l'application de réservation d'espace de parking reçoit le signal de champ proche avec l'identifiant de cet ACD lorsque l'ACD est atteint ; et
- envoyer la requête d'ouverture d'ACD en réponse à une sélection de l'élément de GUI par le conducteur concerné.
